# EUROPEAN PATENT APPLICATION

(11) **EP 4 808 212 A1**
(43) Date of publication of application: **16.09.2026**
(21) Application number: 23958399.0
(22) Date of filing: 09.11.2023
(51) Int. Cl.: H04W 40/12, H04B 17/309, H04W 40/34, H04W 72/51, H04L 5/00, H04W 24/08, H04W 84/06

(54) **APPARATUS AND METHOD FOR PERFORMING SWITCHING IN NON-TERRESTRIAL NETWORK**

(71) Applicant: LG Electronics Inc., Yeongdeungpo-gu Seoul 07336 (KR)
(72) Inventor: SHIN, Wonho, Seoul 06772 (KR); KIM, Bonghoe, Seoul 06772 (KR); KIM, Kijun, Seoul 06772 (KR); LEE, Dongsun, Seoul 06772 (KR); LEE, Jongku, Seoul 06772 (KR)
(74) Representative: Plasseraud IP
(86) International application number: PCT/KR2023/017980
(87) International publication number: WO 2025/100600

(57) **Abstract**

According to various embodiments of the present disclosure, a method performed by a user equipment (UE) in a communication system may comprise receiving, from a base station, a signal in which a channel state information (CSI) resource is punctured through a first node, receiving, from the base station, a CSI-reference signal (RS) based on the CSI resource through a second node, performing a CSI measurement for the second node based on the CSI-RS, and transmitting, to the base station, a result of the CSI measurement through the second node. A reception timing of the signal and a reception timing of the CSI-RS may be based on at least one of the first node, the second node, or a location of the UE.

## Description

### [Technical Field]

The present disclosure relates to a device and method for performing switching in a non-terrestrial network. More particularly, the present disclosure relates to a device and method for performing seamlessly switching to a target satellite path without interrupting the connection to a base station in a state in which a user equipment (UE) is connected to the base station via a source satellite path without performing a handover in a non-terrestrial network.

### [Background Art]

In communication systems of non-terrestrial networks, changes in a low-orbit satellite supporting a UE may periodically occur due to a difference between the orbital speed of the low-orbit satellite and the rotational speed of the Earth. In particular, in a fixed cell scenario, there may be cases where all UEs in a cell shall be switched from a source satellite to a target satellite within a certain time. In this case, if each UE individually performs a handover, problems related to a random access may arise.

To solve these problems, research is required on a method of performing the switching without performing the handover when satellite switching for the UE occurs without changing the base station in a closed cell scenario. In particular, if the UE perform the switching without performing the handover, signaling overhead and service interrupts for the entire communication system may be reduced.

### [Disclosure]

### [Technical Problem]

In order to solve the above-described problems, the present disclosure provides a device and method for seamlessly performing switching to a target satellite path without interrupting the connection to a base station in a state in which a UE is connected to the base station via a source satellite path without performing a handover in a non-terrestrial network.

The present disclosure also provides a device and method for performing a synchronization and a channel quality information report on switching in a non-terrestrial network.

The present disclosure also provides a device and method for measuring channel state information (CSI) of a target satellite and minimizing an interference impact when satellite connection switching to a UE occurs.

### [Technical Solution]

According to various embodiments of the present disclosure, a method performed by a user equipment (UE) in a communication system may comprise receiving, from a base station, a signal in which a channel state information (CSI) resource is punctured through a first node; receiving, from the base station, a CSI-reference signal (RS) based on the CSI resource through a second node; performing a CSI measurement for the second node based on the CSI-RS; and transmitting, to the base station, a result of the CSI measurement through the second node. A reception timing of the signal and a reception timing of the CSI-RS may be based on at least one of the first node, the second node, or a location of the UE.

According to various embodiments of the present disclosure, the UE may be switched from being connected to the base station through the first node to being connected to the base station through the second node.

According to various embodiments of the present disclosure, the UE may be connected to the base station through the second node without a handover from the first node to the second node.

According to various embodiments of the present disclosure, the UE may be connected to the base station through the second node without synchronization to the second node.

According to various embodiments of the present disclosure, the CSI-RS may be received through the punctured CSI resource in the signal.

According to various embodiments of the present disclosure, the reception timing of the signal and the reception timing of the CSI-RS may be based on at least one of first satellite orbit information of the first node, second satellite orbit information of the second node, or the location of the UE.

According to various embodiments of the present disclosure, a delay difference related to a path difference between the first node and the second node may be greater than a cyclic prefix (CP) length, and the delay difference may be based on at least one of the first satellite orbit information, the second satellite orbit information, or the location of the UE.

According to various embodiments of the present disclosure, a method performed by a base station in a communication system may comprise transmitting, to a user equipment (UE), a signal in which a channel state information (CSI) resource is punctured through a first node; transmitting, to the UE, a CSI-reference signal (RS) based on the CSI resource through a second node; and receiving, from the UE, a result of CSI measurement for the second node based on the CSI-RS through the second node. A transmission timing of the signal and a transmission timing of the CSI-RS may be based on at least one of the first node, the second node, or a location of the UE.

According to various embodiments of the present disclosure, the UE may be switched from being connected to the base station through the first node to being connected to the base station through the second node.

According to various embodiments of the present disclosure, the UE may be connected to the base station through the second node without a handover from the first node to the second node.

According to various embodiments of the present disclosure, the UE may be connected to the base station through the second node without synchronization to the second node.

According to various embodiments of the present disclosure, the CSI-RS may be received through the punctured CSI resource in the signal.

According to various embodiments of the present disclosure, the transmission timing of the signal and the transmission timing of the CSI-RS may be based on at least one of first satellite orbit information of the first node, second satellite orbit information of the second node, or the location of the UE.

According to various embodiments of the present disclosure, a delay difference related to a path difference between the first node and the second node may be greater than a cyclic prefix (CP) length, and wherein the delay difference may be based on at least one of the first satellite orbit information, the second satellite orbit information, or the location of the UE.

According to various embodiments of the present disclosure, there is provided a user equipment (UE) operating in a communication system, the UE comprising a transceiver, at least one processor, and at least one memory operably connectable to the at least one processor and storing instructions performing operations based on being executed by the at least one processor, and the operations comprise all steps of a method of operating the UE according to various embodiments of the present disclosure.

According to various embodiments of the present disclosure, there is provided a base station operating in a communication system, the base station comprising a transceiver, at least one processor, and at least one memory operably connectable to the at least one processor and storing instructions performing operations based on being executed by the at least one processor, and the operations comprise all steps of a method of operating the base station according to various embodiments of the present disclosure.

According to various embodiments of the present disclosure, there is provided a control device controlling a user equipment in a communication system, the control device comprising at least one processor and at least one memory operably connected to the at least one processor, and the at least one memory stores instructions performing operations based on being executed by the at least one processor, and the operations comprise all steps of a method of operating the user equipment according to various embodiments of the present disclosure.

According to various embodiments of the present disclosure, there is provided a control device controlling a base station in a communication system, the control device comprising at least one processor and at least one memory operably connected to the at least one processor, and the at least one memory stores instructions performing operations based on being executed by the at least one processor, and the operations comprise all steps of a method of operating the base station according to various embodiments of the present disclosure.

According to various embodiments of the present disclosure, there are provided one or more non-transitory computer readable mediums storing one or more instructions, and the one or more instructions perform operations based on being executed by one or more processors, and the operations comprise all steps of a method of operating a user equipment according to various embodiments of the present disclosure.

According to various embodiments of the present disclosure, there are provided one or more non-transitory computer readable mediums storing one or more instructions, and the one or more instructions perform operations based on being executed by one or more processors, and the operations comprise all steps of a method of operating the base station according to various embodiments of the present disclosure.

### [Advantageous Effects]

According to the present disclosure, there may be a device and method for seamlessly performing switching to a target satellite path without interrupting the connection to a base station in a state in which a UE is connected to the base station via a source satellite path without performing a handover in a non-terrestrial network.

According to the present disclosure, there may be a device and method for performing a synchronization and a channel quality information report on switching in a non-terrestrial network.

According to the present disclosure, there may be a device and method for measuring channel state information (CSI) of a target satellite and minimizing an interference impact when satellite connection switching to a UE occurs.

### [Description of Drawings]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.
FIG. 1 illustrates an example of physical channels and general signal transmission used for the 3GPP system.
FIG. 2 illustrates system architecture of new generation radio access network (NG-RAN).
FIG. 3 illustrates functional split between NG-RAN and 5GC.
FIG. 4 illustrates an example of 5G usage scenario.
FIG. 5 illustrates an example of a communication structure providable in a 6G system.
FIG. 6 schematically illustrates an example of a structure of a perceptron.
FIG. 7 schematically illustrates an example of a structure of a multilayer perceptron.
FIG. 8 schematically illustrates an example of a deep neural network.
FIG. 9 schematically illustrates an example of a convolutional neural network.
FIG. 10 schematically illustrates an example of a filter operation of a convolutional neural network.
FIG. 11 schematically illustrates an example of a neural network structure in which a circular loop exists.
FIG. 12 schematically illustrates an example of an operation structure of a recurrent neural network.
FIG. 13 illustrates an example of an electromagnetic spectrum.
FIG. 14 illustrates an example of THz communication application.
FIG. 15 illustrates an example of an electronic device-based THz wireless communication transceiver.
FIG. 16 illustrates an example of a method of generating an optical device-based THz signal.
FIG. 17 illustrates an example of an optical device-based THz wireless communication transceiver.
FIG. 18 illustrates a structure of a photonic source-based transmitter.
FIG. 19 illustrates a structure of an optical modulator.
FIG. 20 illustrates an example of a non-terrestrial network applicable to the present disclosure.
FIG. 21 illustrates a handover occurrence periodicity.
FIG. 22 illustrates an example of satellite switching applicable to the present disclosure.
FIG. 23 illustrates a delay difference based on a cell size.
FIG. 24 illustrates features of an orthogonal frequency division multiplexing (OFDM) symbol based on a subcarrier spacing.
FIG. 25 illustrates another example of satellite switching applicable to the present disclosure.
FIG. 26 illustrates features of a non-terrestrial network satellite.
FIG. 27 illustrates features of a non-terrestrial network satellite based on a satellite orbit update cycle.
FIG. 28 illustrates a puncturing pattern applicable to the present disclosure.
FIG. 29 illustrates a cyclic prefix (CP) applicable to the present disclosure.
FIG. 30 illustrates an example of consecutive symbols to which the present disclosure is applied.
FIG. 31 illustrates an example of a method for a UE to perform switching in a system applicable to the present disclosure.
FIG. 32 illustrates an example of a method for a base station to support switching of a UE in a system applicable to the present disclosure.
FIG. 33 illustrates a communication system applied to various embodiments of the present disclosure.
FIG. 34 illustrates a wireless device applicable to various embodiments of the present disclosure.
FIG. 35 illustrates another example of a wireless device applicable to various embodiments of the present disclosure.
FIG. 36 illustrates a signal processing circuit for a transmission signal.
FIG. 37 illustrates another example of a wireless device applied to various embodiments of the present disclosure.
FIG. 38 illustrates a hand-held device applied to various embodiments of the present disclosure.
FIG. 39 illustrates a vehicle or an autonomous vehicle applied to various embodiments of the present disclosure.
FIG. 40 illustrates a vehicle applied to various embodiments of the present disclosure.
FIG. 41 illustrates an XR device applied to various embodiments of the present disclosure.
FIG. 42 illustrates a robot applied to various embodiments of the present disclosure.
FIG. 43 illustrates an AI device applied to various embodiments of the present disclosure.

### [Mode for Invention]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

The following technology may be used in various radio access system including CDMA, FDMA, TDMA, OFDMA, SC-FDMA, and the like. The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro. 3GPP 6G may be an evolved version of 3GPP NR.

For clarity in the description, the following description will mostly focus on 3GPP communication system (e.g., LTE-A or 5G NR). However, technical features according to an embodiment of the present disclosure will not be limited only to this. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system. "xxx" means a detailed standard document number. The LTE/NR/6G may be collectively referred to as the 3GPP system. For terms and techniques not specifically described among terms and techniques used in the present disclosure, reference may be made to a wireless communication standard document published before the present disclosure is filed. For example, the following document may be referred to.

### 3GPP LTE

- 36.211: Physical channels and modulation
- 36.212: Multiplexing and channel coding
- 36.213: Physical layer procedures
- 36.300: Overall description
- 36.331: Radio Resource Control (RRC)

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

### Physical Channel and Frame Structure

### Physical Channel and General Signal Transmission

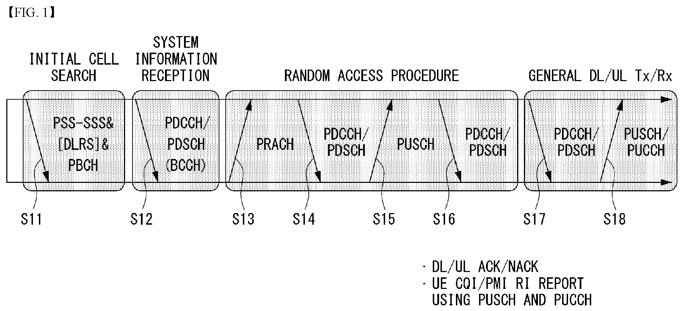

FIG. 1 illustrates an example of physical channels and general signal transmission used for the 3GPP system.

In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S11). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. The UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S12).

When there is no radio resource first accessing the eNB or for signal transmission, the UE may perform a Random Access Procedure (RACH) to the eNB (S13 to S16). To this end, the UE may transmit a specific sequence to a preamble through a Physical Random Access Channel (PRACH) (S13 and S15) and receive a response message (Random Access Response (RAR) message) for the preamble through the PDCCH and a corresponding PDSCH. In the case of a contention based RACH, a Contention Resolution Procedure may be additionally performed (S16).

The UE that performs the above procedure may then perform PDCCH/PDSCH reception (S17) and Physical Uplink Shared Channel (PUSCH)/Physical Uplink Control Channel (PUCCH) transmission (S18) as a general uplink/downlink signal transmission procedure. In particular, the UE may receive Downlink Control Information (DCI) through the PDCCH. Here, the DCI may include control information such as resource allocation information for the UE and formats may be differently applied according to a use purpose.

The control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., via the PUSCH and/or PUCCH.

### Structure of Uplink and Downlink Channels

### Downlink Channel Structure

A base station transmits a related signal to a UE via a downlink channel to be described later, and the UE receives the related signal from the base station via the downlink channel to be described later.

### (1) Physical Downlink Shared Channel (PDSCH)

A PDSCH carries downlink data (e.g., DL-shared channel transport block, DL-SCH TB) and is applied with a modulation method such as quadrature phase shift keying (QPSK), 16 quadrature amplitude modulation (QAM), 64 QAM, and 256 QAM. A codeword is generated by encoding TB. The PDSCH may carry multiple codewords. Scrambling and modulation mapping are performed for each codeword, and modulation symbols generated from each codeword are mapped to one or more layers (layer mapping). Each layer is mapped to a resource together with a demodulation reference signal (DMRS) to generate an OFDM symbol signal, and is transmitted through a corresponding antenna port.

### (2) Physical Downlink Control Channel (PDCCH)

A PDCCH carries downlink control information (DCI) and is applied with a QPSK modulation method, etc. One PDCCH consists of 1, 2, 4, 8, or 16 control channel elements (CCEs) based on an aggregation level (AL). One CCE consists of 6 resource element groups (REGs). One REG is defined by one OFDM symbol and one (P)RB.

The UE performs decoding (aka, blind decoding) on a set of PDCCH candidates to acquire DCI transmitted via the PDCCH. The set of PDCCH candidates decoded by the UE is defined as a PDCCH search space set. The search space set may be a common search space or a UE-specific search space. The UE may acquire DCI by monitoring PDCCH candidates in one or more search space sets configured by MIB or higher layer signaling.

### Uplink Channel Structure

A UE transmits a related signal to a base station via an uplink channel to be described later, and the base station receives the related signal from the UE via the uplink channel to be described later.

### (1) Physical Uplink Shared Channel (PUSCH)

A PUSCH carries uplink data (e.g., UL-shared channel transport block, UL-SCH TB) and/or uplink control information (UCI) and is transmitted based on a CP-OFDM (Cyclic Prefix-Orthogonal Frequency Division Multiplexing) waveform, DFT-s-OFDM (Discrete Fourier Transform-spread-Orthogonal Frequency Division Multiplexing) waveform, or the like. When the PUSCH is transmitted based on the DFT-s-OFDM waveform, the UE transmits the PUSCH by applying a transform precoding. For example, if the transform precoding is not possible (e.g., transform precoding is disabled), the UE may transmit the PUSCH based on the CP-OFDM waveform, and if the transform precoding is possible (e.g., transform precoding is enabled), the UE may transmit the PUSCH based on the CP-OFDM waveform or the DFT-s-OFDM waveform. The PUSCH transmission may be dynamically scheduled by an UL grant within DCI, or may be semi-statically scheduled based on high layer (e.g., RRC) signaling (and/or layer 1 (L1) signaling (e.g., PDCCH)) (configured grant). The PUSCH transmission may be performed based on a codebook or a non-codebook.

### (2) Physical Uplink Control Channel (PUCCH)

A PUCCH carries uplink control information, HARQ-ACK, and/or scheduling request (SR), and may be divided into multiple PUCCHs based on a PUCCH transmission length.

New radio access technology (RAT, NR) is described below.

As more and more communication devices require larger communication capacity, there is a need for enhanced mobile broadband communication compared to the existing radio access technology (RAT). Massive machine type communications (MTCs) which provide various services anytime and anywhere by connecting many devices and objects are also one of the major issues to be considered in next-generation communications. In addition, a communication system design considering a service/UE sensitive to reliability and latency is also being discussed. As above, the introduction of next generation radio access technology considering enhanced mobile broadband communication, massive MTC, ultra-reliable and low latency communication (URLLC), etc. is discussed, and the technology is called new RAT or NR for convenience in various embodiments of the present disclosure.

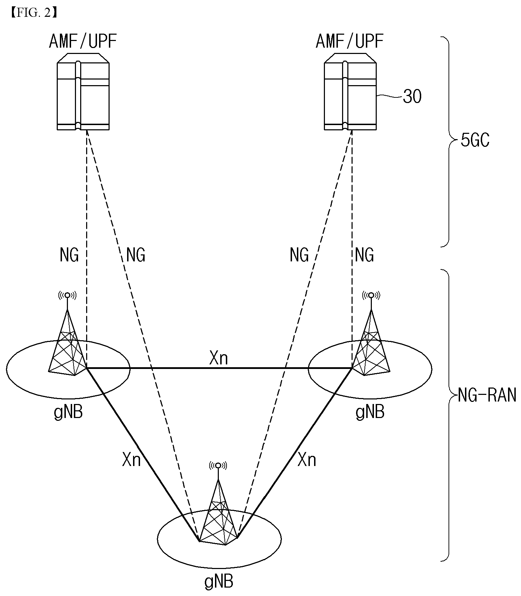

FIG. 2 illustrates system architecture of new generation radio access network (NG-RAN).

Referring to FIG. 2, the NG-RAN may include gNB and/or eNB providing user plane and control plane protocol terminations toward the UE. FIG. 2 illustrates an example where the NG-RAN includes only the gNB. The gNB and the eNB are interconnected via Xn interface. The gNB and the eNB are connected to the 5G core network (5GC) via NG interface. More specifically, the gNB and the eNB are connected to an access and mobility management function (AMF) via NG-C interface and connected to a user plane function (UPF) via NG-U interface.

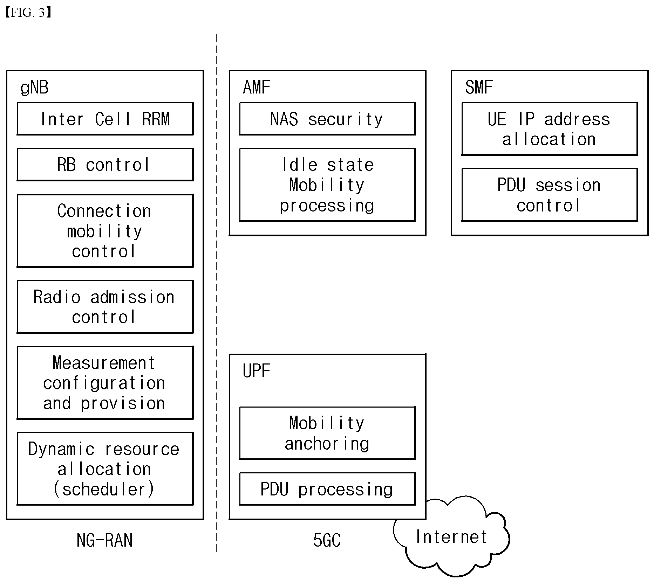

FIG. 3 illustrates functional split between NG-RAN and 5GC.

Referring to FIG. 3, the gNB may provide functions including Inter Cell RRM, RB control, connection mobility control, radio admission control, measurement configuration and provision, dynamic resource allocation, etc. The AMF may provide functions including non-access stratum (NAS) security, idle state mobility processing, etc. The UPF may provide functions including mobility anchoring, protocol data unit (PDU) processing, etc. The session management function (SMF) may provide functions including UE IP address allocation, PDU session control, etc.

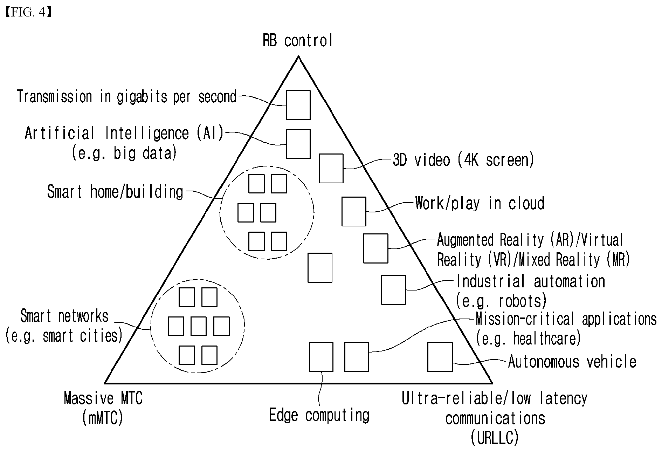

FIG. 4 illustrates an example of 5G usage scenario.

The 5G usage scenario illustrated in FIG. 4 is merely an example, and technical features according to various embodiments of the present disclosure can be applied to other 5G usage scenarios that are not illustrated in FIG. 4.

Referring to FIG. 4, three major requirement areas of 5G include (1) an enhanced mobile broadband (eMBB) area, (2) a massive machine type communication (mMTC) area and (3) an ultra-reliable and low latency communications (URLLC) area. Some use cases may require multiple areas for optimization, and other use case may focus only on one key performance indicator (KPI). 5G intends to support such diverse use cases in a flexible and reliable way.

eMBB focuses on across-the-board enhancements to the data rate, latency, user density, capacity and coverage of mobile broadband access. eMBB targets throughput of about 10Gbps. eMBB goes far beyond basic mobile Internet access and covers rich interactive work, media and entertainment applications in the cloud or augmented reality. Data will be one of the key drivers for 5G and in new parts of this system we may for the first time see no dedicated voice service in the 5G era. In 5G, voice is expected to be handled as an application, simply using the data connectivity provided by the communication system. The main drivers for the increased traffic volume include an increase in size of content and an increase in the number of applications requiring high data transfer rates. Streaming service (audio and video), interactive video and mobile Internet connectivity will continue to be used more broadly as more devices connect to the Internet. Many of these applications require always-on connectivity to push real time information and notifications to the users. Cloud storage and applications are rapidly increasing for mobile communication platforms. This is applicable for both work and entertainment. Cloud storage is one particular use case driving the growth of uplink data transfer rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is augmented reality for entertainment and information retrieval. The augmented reality requires very low latencies and significant instant data volumes.

mMTC is designed to enable communication between devices that are low-cost, massive in number and battery-driven, and is intended to support applications such as smart metering, logistics, and field and body sensors. mMTC targets batteries with a lifespan of about 10 years and/or about 1 million devices per km2. mMTC enables to smoothly connect embedded sensors in all fields and is one of the most expected 5G use case. It is predicted that IoT devices will potentially reach 20.4 billion by 2020. Industrial IoT is one area where 5G will play a major role, enabling smart cities, asset tracking, smart utilities, agriculture, and security infrastructure.

URLLC will make it possible for devices and machines to communicate with ultra-reliability, very low latency and high availability, making it ideal for vehicular communication, industrial control, factory automation, remote surgery, smart grids and public safety applications. URLLC targets latency of about 1ms. URLLC includes new services that will transform industries with ultra-reliable/low latency links like remote control of critical infrastructure and an autonomous vehicle. The level of reliability and latency is vital to smart grid control, industrial automation, robotics, and drone control and coordination.

Next, multiple use cases included within the triangle of FIG. 4 are described in more detail.

5G may supplement fiber-to-the-home (FTTH) and cable-based broadband (or DOCSIS) as means for providing a stream evaluated from gigabits per second to several hundreds of megabits per second. Such fast speed may be necessary to deliver TV with resolution of 4K or more (6K, 8K or more) in addition to virtual reality (VR) and augmented reality (AR). VR and AR applications include immersive sports games. A specific application may require special network configuration. For example, in the VR game, in order for game companies to minimize latency, a core server may need to be integrated with an edge network server of a network operator.

The automotive sector is expected to be an important new driver for 5G, along with many use cases for mobile communications for vehicles. For example, entertainment for passengers requires high capacity and high mobile broadband at the same time. The reason for this is that future users will expect to continue their good quality connection independent of their location and speed. Other use cases for the automotive sector are augmented reality dashboards. The augmented reality dashboards display overlay information on top of what a driver is seeing through the front window through the augmented reality dashboards, identifying objects in the dark and telling the driver about the distances and movements of the objects. In the future, wireless modules will enable communication between vehicles, information exchange between vehicles and supporting infrastructure, and information exchange between vehicles and other connected devices (e.g., devices carried by pedestrians). Safety systems guide drivers on alternative courses of action to allow them to drive more safely and lower the risks of accidents. A next phase will be a remotely controlled vehicle or an autonomous vehicle. This requires ultra reliable and very fast communication between different autonomous vehicles and/or between vehicles and infrastructure. In the future, an autonomous vehicle may take care of all driving activity, allowing the driver to rest and concentrate only on traffic anomalies that the vehicle itself cannot identify. The technical requirements for autonomous vehicles require for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost and energy-efficient maintenance of the city or home. A similar setup can be done for each home, where temperature sensors, window and heating controllers, burglar alarms and home appliances are all connected wirelessly. Many of these sensors are typically low data rate, low power and low cost. However, for example, real time HD video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information can include the behaviors of suppliers and consumers, allowing the smart grid to improve the efficiency, reliability, economics and sustainability of the production and distribution of fuels such as electricity in an automated fashion. A smart grid can be seen as another sensor network with low delays.

The health sector has many applications that can benefit from mobile communications. Communications systems enable telemedicine, which provides clinical health care at a distance. It helps eliminate distance barriers and can improve access to medical services that would often not be consistently available in distant rural communities. It is also used to save lives in critical care and emergency situations. Wireless sensor networks based on mobile communication can provide remote monitoring and sensors for parameters such as heart rate and blood pressure.

Wireless and mobile communications are becoming increasingly important for industrial application. Wires are expensive to install and maintain. Therefore, the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G.

Logistics and freight tracking are important use cases for mobile communications that enable the tracking of inventory and packages wherever they are through using location based information systems. The logistics and freight use cases typically require lower data rates but need wide coverage and reliable location information.

Examples of next generation communication (e.g., 6G) that can be applied to various embodiments of the present disclosure are described below.

### 6G system general

A 6G (wireless communication) system has purposes such as (i) a very high data rate per device, (ii) a very large number of connected devices, (iii) global connectivity, (iv) a very low latency, (v) a reduction in energy consumption of battery-free IoT devices, (vi) ultra-reliable connectivity, and (vii) connected intelligence with machine learning capability. The vision of the 6G system may include four aspects such as intelligent connectivity, deep connectivity, holographic connectivity, and ubiquitous connectivity, and the 6G system may satisfy the requirements shown in Table 1 below. That is, Table 1 shows an example of the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion, and enhanced data security.

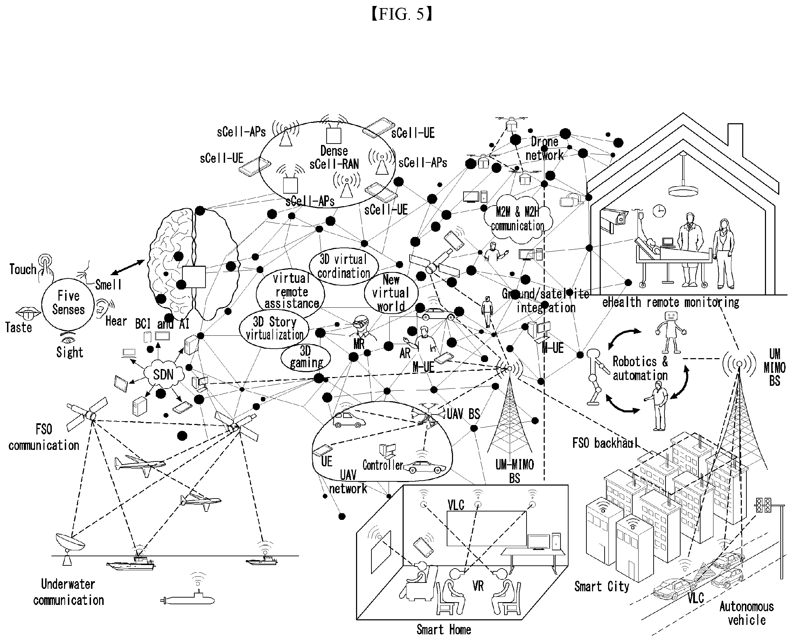

FIG. 5 illustrates an example of a communication structure providable in a 6G system.

The 6G system is expected to have 50 times greater simultaneous wireless communication connectivity than a 5G wireless communication system. URLLC, which is the key feature of 5G, will become more important technology by providing an end-to-end latency less than 1 ms in 6G communication. The 6G system may have much better volumetric spectrum efficiency unlike frequently used domain spectrum efficiency. The 6G system can provide advanced battery technology for energy harvesting and very long battery life, and thus mobile devices may not need to be separately charged in the 6G system. In 6G, new network characteristics may be as follows.
- Satellites integrated network: To provide a global mobile group, 6G will be integrated with satellite. Integration of terrestrial, satellite and public networks into one wireless communication system is critical for 6G.
- Connected intelligence: Unlike the wireless communication systems of previous generations, 6G is innovative and may update wireless evolution from "connected things" to "connected intelligence". AI may be applied in each step (or each signal processing procedure to be described later) of a communication procedure.
- Seamless integration of wireless information and energy transfer: A 6G wireless network may transfer power to charge batteries of devices such as smartphones and sensors. Therefore, wireless information and energy transfer (WIET) will be integrated.
- Ubiquitous super 3D connectivity: Access to networks and core network functions of drone and very low earth orbit satellite will establish super 3D connectivity in 6G ubiquitous.

In the new network properties cs of 6G described above, several general requirements may be as follows.
- Small cell networks: The idea of a small cell network has been introduced to improve received signal quality as a result of throughput, energy efficiency, and spectrum efficiency improvement in a cellular system. As a result, the small cell network is an essential feature for 5G and beyond 5G (5GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network consisting of heterogeneous networks improves overall QoS and reduces costs.
- High-capacity backhaul: Backhaul connectivity is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5GB network in order to ensure flexibility, reconfigurability and programmability. Further, billions of devices can be shared on a shared physical infrastructure.

### Core implementation technology of 6G System

### Artificial Intelligence (AI)

Technology which is most important in the 6G system and will be newly introduced is AI. AI was not involved in the 4G system. The 5G system will support partial or very limited AI. However, the 6G system will support AI for full automation. Advance in machine learning will create a more intelligent network for real-time communication in 6G. When AI is introduced to communication, real-time data transmission can be simplified and improved. AI may determine a method of performing complicated target tasks using countless analysis. That is, AI can increase efficiency and reduce processing delay.

Time-consuming tasks such as handover, network selection or resource scheduling may be immediately performed by using AI. AI may play an important role even in M2M, machine-to-human and human-to-machine communication. In addition, AI may be rapid communication in a brain computer interface (BCI). An AI based communication system may be supported by meta materials, intelligent structures, intelligent networks, intelligent devices, intelligent recognition radios, self-maintaining wireless networks and machine learning.

Recently, attempts have been made to integrate AI with a wireless communication system in the application layer or the network layer, and in particular, deep learning has been focused on the wireless resource management and allocation field. However, such studies have been gradually developed to the MAC layer and the physical layer, and in particular, attempts to combine deep learning in the physical layer with wireless transmission are emerging. AI-based physical layer transmission means applying a signal processing and communication mechanism based on an AI driver rather than a traditional communication framework in a fundamental signal processing and communication mechanism. For example, channel coding and decoding based on deep learning, signal estimation and detection based on deep learning, multiple input multiple output (MIMO) mechanisms based on deep learning, resource scheduling and allocation based on AI, etc. may be included.

Machine learning may be used for channel estimation and channel tracking and may be used for power allocation, interference cancellation, etc. in the physical layer of DL. The machine learning may also be used for antenna selection, power control, symbol detection, etc. in the MIMO system.

However, application of a deep neutral network (DNN) for transmission in the physical layer may have the following problems.

A deep learning based AI algorithm requires a lot of training data in order to optimize training parameters. However, due to limitations in acquiring data in a specific channel environment as the training data, a lot of training data is used offline. Static training for the training data in the specific channel environment may cause a contradiction between the diversity and dynamic characteristics of a radio channel.

Currently, the deep learning mainly targets real signals. However, signals of the physical layer of wireless communication are complex signals. For matching of the characteristics of a wireless communication signal, studies on a neural network for detecting a complex domain signal are further required.

Hereinafter, machine learning is described in more detail.

Machine learning refers to a series of operations to train a machine in order to create a machine capable of doing tasks that people cannot do or are difficult for people to do. Machine learning requires data and learning models. In the machine learning, a data learning method may be roughly divided into three methods, that is, supervised learning, unsupervised learning and reinforcement learning.

Neural network learning is to minimize an output error. The neural network learning refers to a process of repeatedly inputting training data to a neural network, calculating an error of an output and a target of the neural network for the training data, backpropagating the error of the neural network from an output layer to an input layer of the neural network for the purpose of reducing the error, and updating a weight of each node of the neural network.

The supervised learning may use training data labeled with a correct answer, and the unsupervised learning may use training data which is not labeled with a correct answer. That is, for example, in supervised learning for data classification, training data may be data in which each training data is labeled with a category. The labeled training data may be input to the neural network, and the error may be calculated by comparing the output (category) of the neural network with the label of the training data. The calculated error is backpropagated in the neural network in the reverse direction (i.e., from the output layer to the input layer), and a connection weight of respective nodes of each layer of the neural network may be updated based on the backpropagation. Change in the updated connection weight of each node may be determined depending on a learning rate. The calculation of the neural network for input data and the backpropagation of the error may construct a learning cycle (epoch). The learning rate may be differently applied based on the number of repetitions of the learning cycle of the neural network. For example, in the early stage of learning of the neural network, efficiency can be increased by allowing the neural network to rapidly ensure a certain level of performance using a high learning rate, and in the late of learning, accuracy can be increased using a low learning rate.

The learning method may vary depending on the feature of data. For example, in order for a reception end to accurately predict data transmitted from a transmission end on a communication system, it is preferable that learning is performed using the supervised learning rather than the unsupervised learning or the reinforcement learning.

The learning model corresponds to the human brain and may be regarded as the most basic linear model. However, a paradigm of machine learning using, as the learning model, a neural network structure with high complexity, such as artificial neural networks, is referred to as deep learning.

Neural network cores used as the learning method may roughly include a deep neural network (DNN) method, a convolutional deep neural network (CNN) method, and a recurrent Boltzmann machine (RNN) method.

The artificial neural network is an example of connecting several perceptrons.

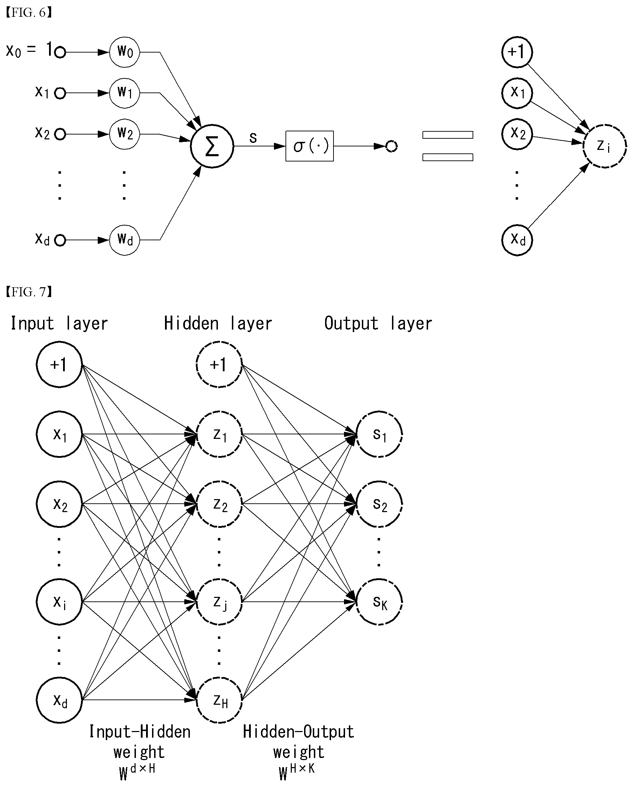

FIG. 6 illustrates an example of a structure of a perceptron.

Referring to FIG. 6, when an input vector x=(x1, x2, ..., xd) is input, each component is multiplied by a weight (W1, W2, ..., Wd), and all the results are summed. After that, the entire process of applying an activation function σ(·) is called a perceptron. The huge artificial neural network structure may extend the simplified perceptron structure illustrated in FIG. 6 to apply the input vector to different multidimensional perceptrons. For convenience of explanation, an input value or an output value is referred to as a node.

The perceptron structure illustrated in FIG. 6 may be described as consisting of a total of three layers based on the input value and the output value. FIG. 7 illustrates an artificial neural network in which the number of (d+1) dimensional perceptrons between a first layer and a second layer is H, and the number of (H+1) dimensional perceptrons between the second layer and a third layer is K, by way of example.

FIG. 7 illustrates an example of a structure of a multilayer perceptron.

A layer where the input vector is located is called an input layer, a layer where a final output value is located is called an output layer, and all layers located between the input layer and the output layer are called a hidden layer. FIG. 7 illustrates three layers, by way of example. However, since the number of layers of the artificial neural network is counted excluding the input layer, it can be seen as a total of two layers. The artificial neural network is constructed by connecting the perceptrons of a basic block in two dimensions.

The above-described input layer, hidden layer, and output layer can be jointly applied in various artificial neural network structures, such as CNN and RNN to be described later, as well as the multilayer perceptron. The greater the number of hidden layers, the deeper the artificial neural network is, and a machine learning paradigm that uses the sufficiently deep artificial neural network as a learning model is called deep learning. In addition, the artificial neural network used for deep learning is called a deep neural network (DNN).

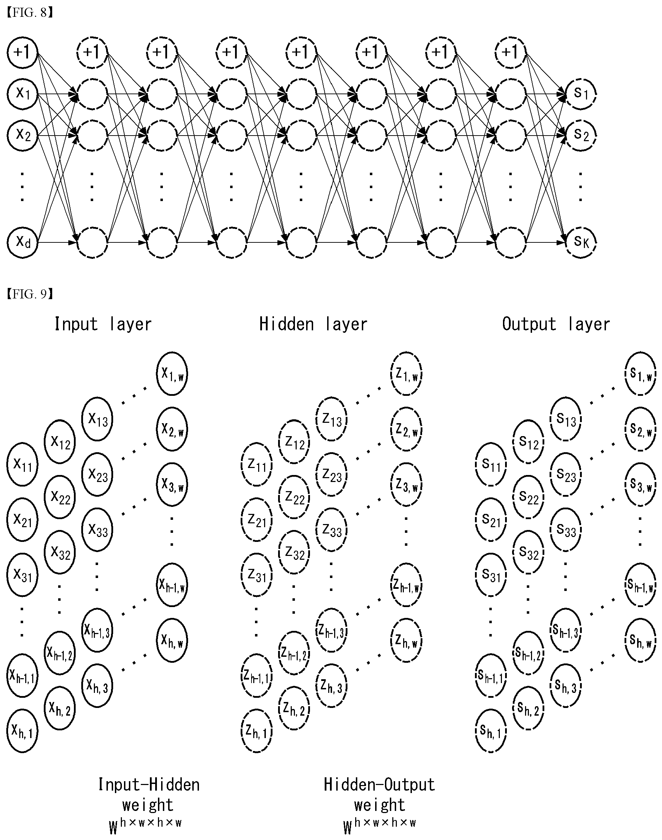

FIG. 8 illustrates an example of a deep neural network.

The deep neural network illustrated in FIG. 8 is a multilayer perceptron consisting of eight hidden layers + eight output layers. The multilayer perceptron structure is expressed as a fully connected neural network. In the fully connected neural network, a connection relationship does not exist between nodes located at the same layer, and a connection relationship exists only between nodes located at adjacent layers. The DNN has a fully connected neural network structure and is composed of a combination of multiple hidden layers and activation functions, so it can be usefully applied to understand correlation characteristics between input and output. The correlation characteristic may mean a joint probability of input and output.

Based on how the plurality of perceptrons are connected to each other, various artificial neural network structures different from the above-described DNN can be formed.

FIG. 9 illustrates an example of a structure of a convolutional neural network.

In the DNN, nodes located inside one layer are arranged in a one-dimensional longitudinal direction. However, in FIG. 9, it may be assumed that w nodes horizontally and h nodes vertically are arranged in two dimensions (convolutional neural network structure of FIG. 9). In this case, since in a connection process leading from one input node to the hidden layer, a weight is given for each connection, a total of h×w weights needs to be considered. Since there are h×w nodes in the input layer, a total of h2w2 weights are required between two adjacent layers.

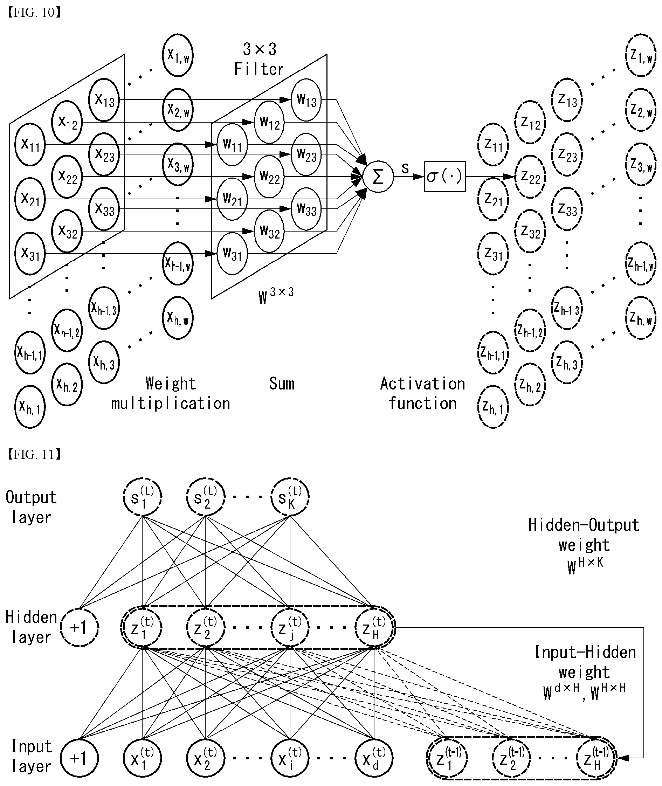

The convolutional neural network of FIG. 9 has a problem in that the number of weights increases exponentially depending on the number of connections. Therefore, instead of considering the connections of all the nodes between adjacent layers, it is assumed that a small-sized filter exists, and a weighted sum and an activation function calculation are performed on an overlap portion of the filters as illustrated in FIG. 10.

FIG. 10 illustrates an example of a filter operation of a convolutional neural network.

One filter has a weight corresponding to the number as much as its size, and learning of the weight may be performed so that a certain feature on an image can be extracted and output as a factor. In FIG. 10, a filter having a size of 3×3 is applied to the upper leftmost 3×3 area of the input layer, and an output value obtained by performing a weighted sum and an activation function calculation for a corresponding node is stored in z22.

The filter performs the weighted sum and the activation function calculation while moving horizontally and vertically by a predetermined interval when scanning the input layer, and places the output value at a location of a current filter. This calculation method is similar to the convolution operation on images in the field of computer vision. Thus, a deep neural network with this structure is referred to as a convolutional neural network (CNN), and a hidden layer generated as a result of the convolution operation is referred to as a convolutional layer. In addition, a neural network in which a plurality of convolutional layers exists is referred to as a deep convolutional neural network (DCNN).

At the node where a current filter is located at the convolutional layer, the number of weights may be reduced by calculating a weighted sum including only nodes located in an area covered by the filter. Hence, one filter can be used to focus on features for a local area. Accordingly, the CNN can be effectively applied to image data processing in which a physical distance on the 2D area is an important criterion. In the CNN, a plurality of filters may be applied immediately before the convolution layer, and a plurality of output results may be generated through a convolution operation of each filter.

There may be data whose sequence characteristics are important depending on data attributes. A structure, in which a method of inputting one element on the data sequence at each time step considering a length variability and a relationship of the sequence data and inputting an output vector (hidden vector) of a hidden layer output at a specific time step together with a next element on the data sequence is applied to the artificial neural network, is referred to as a recurrent neural network structure.

FIG. 11 illustrates an example of a neural network structure in which a circular loop exists.

Referring to FIG. 11, a recurrent neural network (RNN) is a structure in which in a process of inputting elements (x1(t), x2(t),..., xd(t)) of any line of sight 't' on a data sequence to a fully connected neural network, hidden vectors (z1(t-1), z2(t-1), ..., zH(t-1)) are input together at an immediately previous time step (t-1) to apply a weighted sum and an activation function. A reason for transferring the hidden vectors at a next time step is that information within the input vector in previous time steps is considered to be accumulated on the hidden vectors of a current time step.

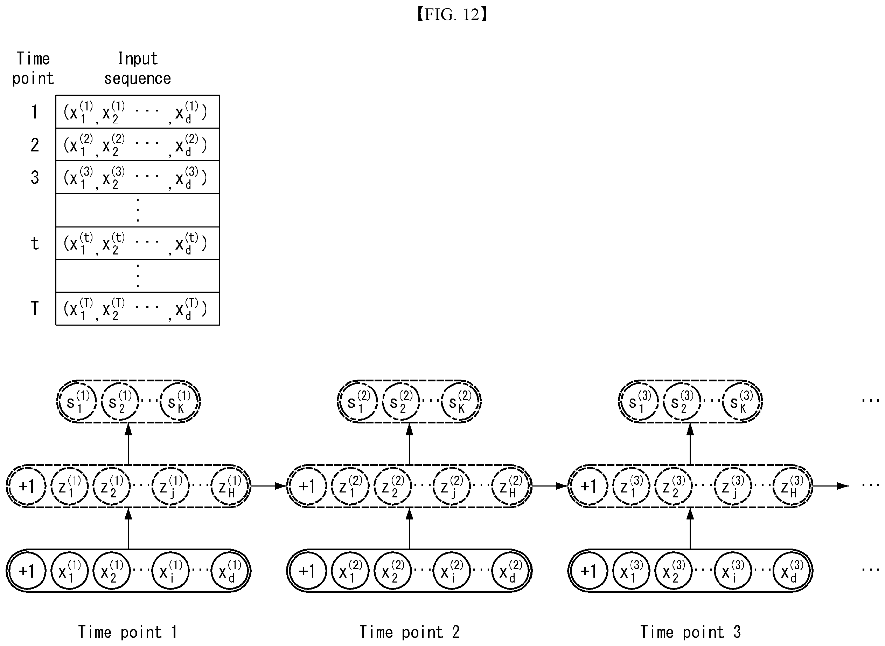

FIG. 12 illustrates an example of an operation structure of a recurrent neural network.

Referring to FIG. 12, the recurrent neural network operates in a predetermined order of time with respect to an input data sequence.

Hidden vectors (z1(1), z2(1), ..., zH(1)) when input vectors (x1(t), x2(t), ..., xd(t)) at a time step 1 are input to the recurrent neural network, are input together with input vectors (x1(2), x2(2), ..., xd(2)) at a time step 2 to determine vectors (z1(2), z2(2), ..., zH(2)) of a hidden layer through a weighted sum and an activation function. This process is repeatedly performed at time steps 2, 3, ..., T.

When a plurality of hidden layers are disposed in the recurrent neural network, this is referred to as a deep recurrent neural network (DRNN). The recurrent neural network is designed to be usefully applied to sequence data (e.g., natural language processing).

A neural network core used as a learning method includes various deep learning methods such as a restricted Boltzmann machine (RBM), a deep belief network (DBN), and a deep Q-network, in addition to the DNN, the CNN, and the RNN, and may be applied to fields such as computer vision, speech recognition, natural language processing, and voice/signal processing.

Recently, attempts to integrate AI with a wireless communication system have appeared, but this has been concentrated in the field of wireless resource management and allocation in the application layer, network layer, in particular, deep learning. However, such research is gradually developing into the MAC layer and the physical layer, and in particular, attempts to combine deep learning with wireless transmission in the physical layer have appeared. The AI-based physical layer transmission refers to applying a signal processing and communication mechanism based on an AI driver, rather than a traditional communication framework in the fundamental signal processing and communication mechanism. For example, deep learning-based channel coding and decoding, deep learning-based signal estimation and detection, deep learning-based MIMO mechanism, AI-based resource scheduling and allocation, and the like, may be included.

### Terahertz (THz) Communication

A data transfer rate can be increased by increasing the bandwidth. This can be performed by using sub-TH communication as a wide bandwidth and applying advanced massive MIMO technology. THz waves, which are known as sub-millimeter radiation, generally indicate a frequency band between 0.1 THz and 10 THz with the corresponding wavelengths in the range of 0.03 mm-3 mm. A band range of 100 GHz to 300 GHz (sub THz band) is regarded as a main part of the THz band for cellular communication. When the sub-THz band is added to the mmWave band, the 6G cellular communication capacity increases. 300 GHz-3 THz among the defined THz band is in a far infrared (IR) frequency band. Although the 300 GHz-3 THz band is part of the optical band, it is at the border of the optical band and is immediately after the RF band. Therefore, this 300 GHz-3 THz band shows similarity with RF.

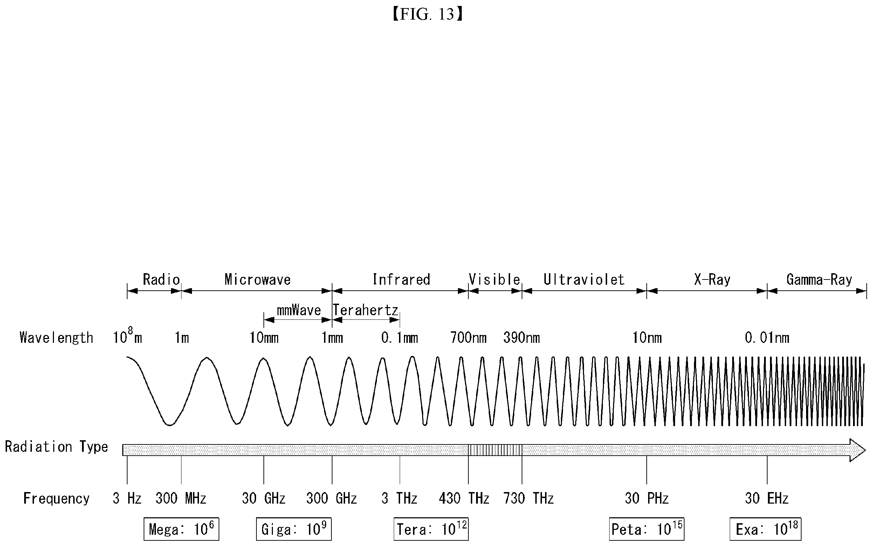

FIG. 13 illustrates an example of an electromagnetic spectrum.

The main characteristics of THz communication include (i) a bandwidth widely available to support a very high data transfer rate and (ii) a high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Through this, an advanced adaptive arrangement technology capable of overcoming a range limitation can be used.

### Optical Wireless Technology

Optical wireless communication (OWC) technologies are envisioned for 6G communication in addition to RF based communications for all possible device-to-access networks. These networks access network-to-backhaul/fronthaul network connectivity. The OWC technologies have already been used since 4G communication systems, but will be used more widely to meet the demands of the 6G communication system. The OWC technologies, such as light fidelity, visible light communication, optical camera communication, and FSO communication based on the optical band, are already well-known technologies. Communications based on wireless optical technologies can provide very high data rates, low latencies, and secure communications. LiDAR, which is also based on the optical band, is a promising technology for very high-resolution 3D mapping in 6G communications.

### FSO Backhaul Network

Characteristics of a transmitter and a receiver of the FSO system are similar to characteristics of an optical fiber network. Therefore, data transmission of the FSO system similar to that of the optical fiber system. Accordingly, FSO can be a good technology for providing backhaul connectivity in the 6G system along with the optical fiber network. If FSO is used, very long-distance communication is possible even at a distance of 10,000 km or more. FSO supports massive backhaul connectivity for remote and non-remote areas such as sea, space, underwater, and isolated islands. FSO also supports cellular BS connectivity.

### Massive MIMO Technology

One of core technologies for improving spectral efficiency is to apply MIMO technology. When the MIMO technology is improved, the spectral efficiency is also improved. Therefore, massive MIMO technology will be important in the 6G system. Since the MIMO technology uses multiple paths, multiplexing technology and beam generation and management technology suitable for the THz band should be significantly considered so that data signals can be transmitted through one or more paths.

### Block chain

A block chain will be an important technology for managing large amounts of data in future communication systems. The block chain is a form of distributed ledger technology, and the distributed ledger is a database distributed across numerous nodes or computing devices. Each node duplicates and stores the same copy of the ledger. The block chain is managed by a P2P network. This may exist without being managed by a centralized institution or server. Block chain data is collected together and is organized into blocks. The blocks are connected to each other and protected using encryption. The block chain completely complements large-scale IoT through improved interoperability, security, privacy, stability, and scalability. Accordingly, the block chain technology provides several functions such as interoperability between devices, high-capacity data traceability, autonomous interaction of different IoT systems, and large-scale connection stability of 6G communication systems.

### 3D Networking

The 6G system integrates the ground and air networks to support communications for users in the vertical extension. The 3D BSs will be provided by low-orbit satellites and UAVs. The addition of new dimensions in terms of height and the associated degrees of freedom makes 3D connectivity significantly different from traditional 2D networks.

### Quantum Communication

Unsupervised reinforcement learning in networks is promising in the context of 6G networks. Supervised learning approaches will not be practical for labeling large amounts of data generated in 6G. Unsupervised learning does not require labeling. Therefore, this technique can be used to create the representations of complex networks autonomously. By combining reinforcement learning and unsupervised learning, it is possible to operate the network truly autonomously.

### Unmanned Aerial Vehicle

An unmanned aerial vehicle (UAV) or drone will be an important factor in 6G wireless communication. In most cases, a high-speed data wireless connection is provided using UAV technology. A BS entity is installed in the UAV to provide cellular connectivity. The UAVs have specific features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC, and mMTC. The UAV can also support a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

### Cell-free Communication

The tight integration of multiple frequencies and different communication technologies is very important in 6G systems. As a result, the user can move seamlessly from one network to another network without the need for making any manual configurations in the device. The best network is automatically selected from the available communication technology. This will break the limits of the concept of cells in wireless communications. Currently, the user's movement from one cell to another cell causes too many handovers in dense networks, and also causes handover failures, handover delays, data losses, and the ping-pong effect. The 6G cell-free communications will overcome all these and provide better QoS. Cell-free communication will be achieved through multi-connectivity and multi-tier hybrid techniques and by different and heterogeneous radios in the devices.

### Integration of Wireless Information and Energy Transfer (WIET)

WIET uses the same field and wave as a wireless communication system. In particular, a sensor and a smartphone will be charged using wireless power transfer during communication. WIET is a promising technology for extending the life of battery charging wireless systems. Therefore, devices without battery will be supported in 6G communication.

### Integration of Sensing and Communication

An autonomous wireless network is a function for continuously detecting a dynamically changing environment state and exchanging information between different nodes. In 6G, sensing will be tightly integrated with communication to support autonomous systems.

### Integration of Access Backhaul Network

In 6G, the density of access networks will be enormous. Each access network is connected by optical fiber and backhaul connectivity such as FSO network. To cope with a very large number of access networks, there will be a tight integration between the access and backhaul networks.

### Hologram Beamforming

Beamforming is a signal processing procedure that adjusts an antenna array to transmit radio signals in a specific direction. This is a subset of smart antennas or advanced antenna systems. Beamforming technology has several advantages, such as high signal-to-noise ratio, interference prevention and rejection, and high network efficiency. Hologram beamforming (HBF) is a new beamforming method that differs significantly from MIMO systems because this uses a software-defined antenna. HBF will be a very effective approach for efficient and flexible transmission and reception of signals in multi-antenna communication devices in 6G.

### Big Data Analysis

Big data analysis is a complex process for analyzing various large data sets or big data. This process finds information such as hidden data, unknown correlations, and customer disposition to ensure complete data management. Big data is collected from various sources such as video, social networks, images and sensors. This technology is widely used for processing massive data in the 6G system.

### Large Intelligent Surface (LIS)

In the THz band signal, since the straightness is strong, there may be many shaded areas due to obstacles. By installing the LIS near these shaded areas, LIS technology, that expands a communication area, enhances communication stability, and enables additional optional services, becomes important. The LIS is an artificial surface made of electromagnetic materials, and can change propagation of incoming and outgoing radio waves. The LIS can be viewed as an extension of massive MIMO, but is different from the massive MIMO in an array structure and an operating mechanism. Further, the LIS has an advantage such as low power consumption, because this operates as a reconfigurable reflector with passive elements, that is, signals are only passively reflected without using active RF chains. In addition, since each of the passive reflectors of the LIS has to independently adjust the phase shift of an incident signal, this may be advantageous for wireless communication channels. By properly adjusting the phase shift through an LIS controller, the reflected signal can be collected at a target receiver to boost the received signal power.

### Terahertz (THz) wireless communication general

THz wireless communication uses wireless communication using a THz wave having a frequency of approximately 0.1 to 10 THz (1 THz = 1012 Hz) and may refer to THz band wireless communication using a very high carrier frequency of 100 GHz or more. The THz wave is located between radio frequency (RF)/millimeter (mm) and infrared bands, and (i) transmits non-metallic/non-polarizable materials better than visible/infrared rays, has a shorter wavelength than the RF/millimeter wave to have high straightness, and is capable of beam convergence. In addition, the photon energy of the THz wave is only a few meV and thus is harmless to the human body. A frequency band which is expected to be used for THz wireless communication may be D-band (110 GHz to 170 GHz) or H-band (220 GHz to 325 GHz) band with a low propagation loss due to molecular absorption in air. Standardization discussion on THz wireless communication is being discussed mainly in IEEE 802.15 THz working group in addition to 3GPP, and standard documents issued by a task group of IEEE 802.15 (e.g., TG3d, TG3e) can specify and supplement the description of the present disclosure. The THz wireless communication may be applied to wireless cognition, sensing, imaging, wireless communication, THz navigation, etc.

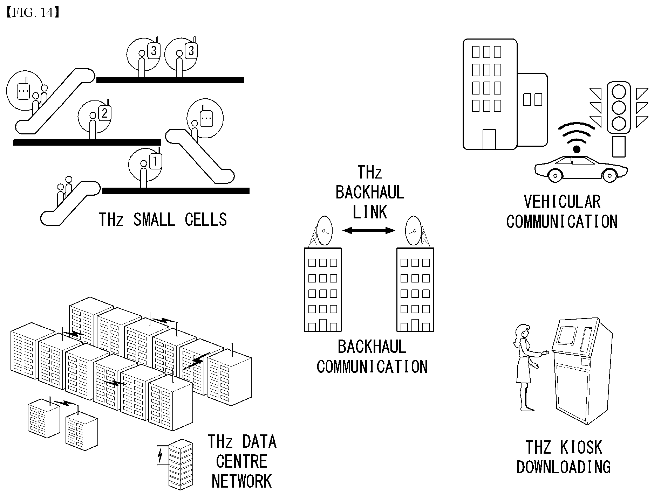

FIG. 14 illustrates an example of a THz communication application.

As illustrated in FIG. 14, a THz wireless communication scenario may be classified into a macro network, a micro network, and a nanoscale network. In the macro network, THz wireless communication may be applied to vehicle-to-vehicle connectivity and backhaul/fronthaul connectivity. In the micro network, THz wireless communication may be applied to near-field communication such as indoor small cells, fixed point-to-point or multi-point connection such as wireless connection in a data center, and kiosk downloading.

Table 2 below shows an example of technology which can be used in the THz wave.

**[Table 2]**

| | |
|---|---|
| Transceivers Device | Available immature: UTC-PD, RTD and SBD |
| Modulation and coding | Low order modulation techniques (OOK, QPSK), LDPC, Reed Soloman, Hamming, Polar, Turbo |
| Antenna | Omni and Directional, phased array with low number of antenna elements |
| Bandwidth | 69GHz (or 23 GHz) at 300GHz |
| Channel models | Partially |
| Data rate | 100Gbps |
| Outdoor deployment | No |
| Free space loss | High |
| Coverage | Low |
| Radio Measurements | 300GHz indoor |
| Device size | Few micrometers |

THz wireless communication can be classified based on a method for generating and receiving THz. The method of generating THz can be classified as an optical device or an electronic device-based technology.

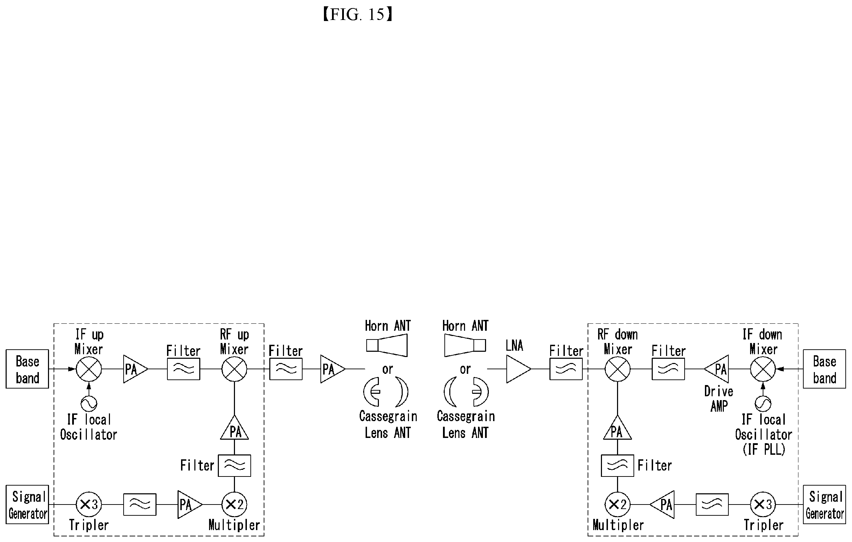

FIG. 15 illustrates an example of an electronic device-based THz wireless communication transceiver.

The method of generating THz using an electronic device includes a method using a semiconductor device such as a resonant tunneling diode (RTD), a method using a local oscillator and a multiplier, a monolithic microwave integrated circuit (MMIC) method using a compound semiconductor high electron mobility transistor (HEMT) based integrated circuit, a method using a Si-CMOS based integrated circuit, and the like. In FIG. 15, a multiplier (e.g., doubler, tripler) is applied to increase the frequency, and radiation is performed by an antenna via a subharmonic mixer. Since the THz band forms a high frequency, the multiplier is essential. Here, the multiplier is a circuit that allows the frequency to have an output frequency which is N times an input frequency, and the multiplier matches a desired harmonic frequency and filters out all the remaining frequencies. In addition, beamforming may be implemented by applying an array antenna or the like to the antenna of FIG. 15. In FIG. 15, IF denotes an intermediate frequency, a tripler and a multiplier denote a multiplier, PA denotes a power amplifier, LNA denotes a low noise amplifier, and PLL denotes a phase-locked loop.

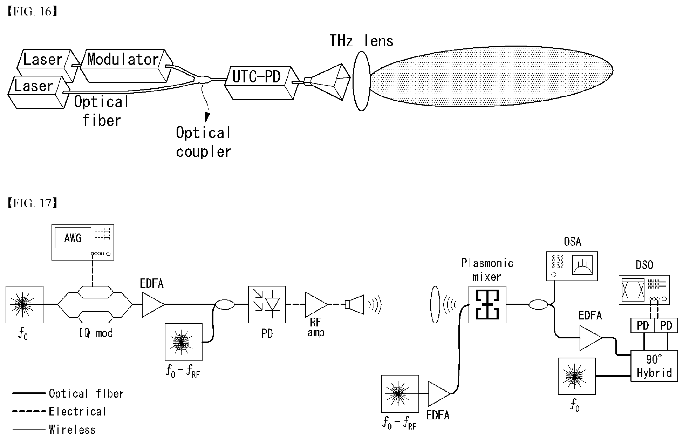

FIG. 16 illustrates an example of a method of generating an optical device-based THz signal.

FIG. 17 illustrates an example of an optical device-based THz wireless communication transceiver.

The optical device-based THz wireless communication technology refers to a method of generating and modulating a THz signal using an optical device. The optical device-based THz signal generation technology refers to a technology that generates an ultrahigh-speed optical signal using a laser and an optical modulator and converts it into a THz signal using an ultrahigh-speed photodetector. This technology is easy to increase the frequency compared to the technology using only the electronic device, can generate a high-power signal, and can obtain a flat response characteristic in a wide frequency band. In order to generate the optical device-based THz signal, as illustrated in FIG. 16, a laser diode, a broadband optical modulator, and an ultrahigh-speed photodetector are required. In FIG. 16, light signals of two lasers having different wavelengths are combined to generate a THz signal corresponding to difference in a wavelength between the lasers. In FIG. 16, an optical coupler refers to a semiconductor device that transmits an electrical signal using light waves to provide coupling with electrical isolation between circuits or systems, and a uni-travelling carrier photo-detector (UTC-PD) is one of photodetectors, which uses electrons as an active carrier and reduces the travel time of electrons by bandgap grading. The UTC-PD is capable of photodetection at 150 GHz or more. In FIG. 17, an erbium-doped fiber amplifier (EDFA) denotes an optical fiber amplifier to which erbium is added, a photo detector (PD) denotes a semiconductor device capable of converting an optical signal into an electrical signal, and OSA denotes an optical sub assembly in which various optical communication functions (e.g., photoelectric conversion, electrophotic conversion, etc.) are modularized as one component, and DSO denotes a digital storage oscilloscope.

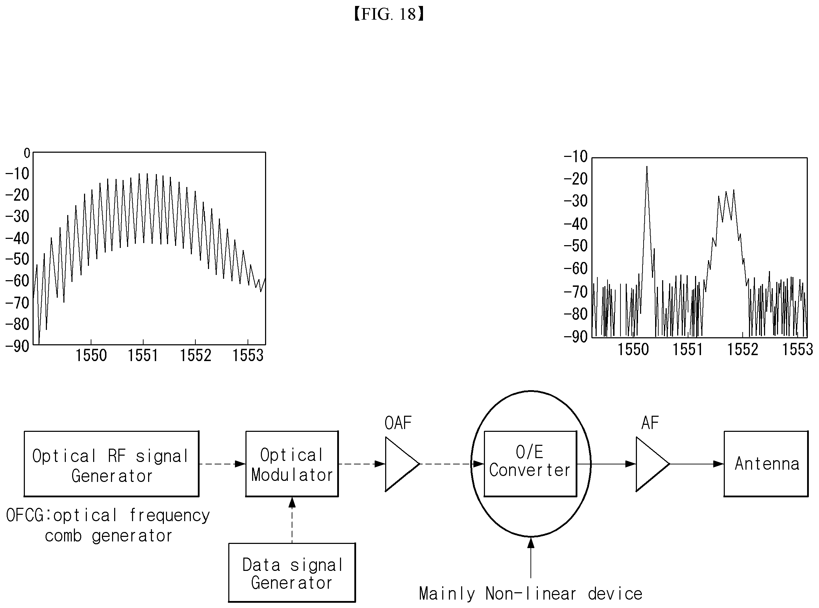

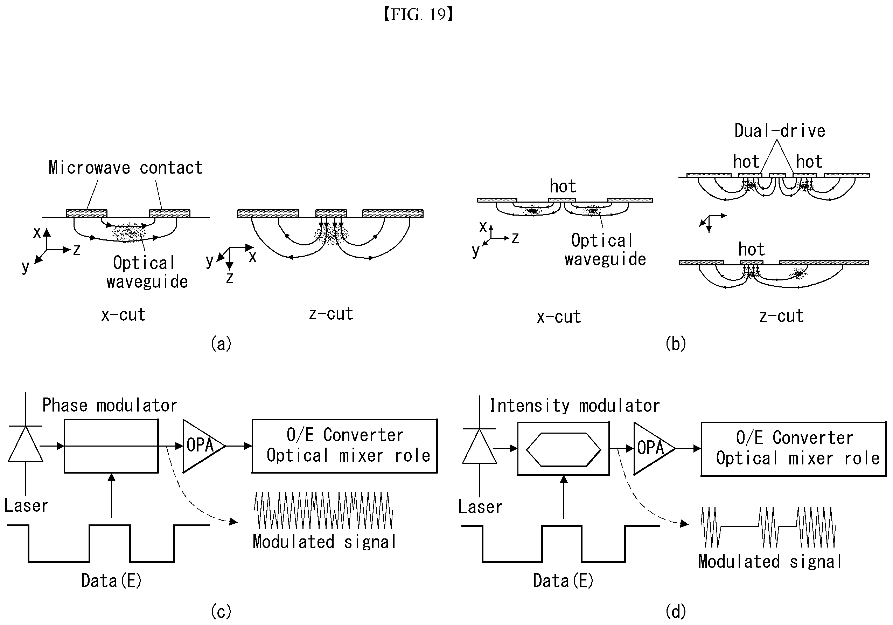

A structure of a photoelectric converter is described with reference to FIGS. 18 and 19.

FIG. 18 illustrates a structure of a photoinc source-based transmitter.

FIG. 19 illustrates a structure of an optical modulator.

Generally, an optical source of a laser may change a phase of a signal by passing through an optical wave guide. In this instance, data is carried by changing electrical characteristics through a microwave contact, or the like. Thus, an optical modulator output is formed in the form of a modulated waveform. A photoelectric modulator (O/E converter) may generate THz pulses based on an optical rectification operation by a nonlinear crystal, a photoelectric conversion (O/E conversion) by a photoconductive antenna, and emission from a bunch of relativistic electrons. The THz pulse generated in the above manner may have a length of a unit from femto second to pico second. The photoelectric converter (O/E converter) performs down-conversion using non-linearity of the device.

Considering THz spectrum usage, multiple contiguous GHz bands are likely to be used as fixed or mobile service usage for the terahertz system. According to outdoor scenario criteria, an available bandwidth may be classified based on oxygen attenuation 10^2 dB/km in the spectrum of up to 1 THz. Hence, a framework in which the available bandwidth consists of several band chunks may be considered. As an example of the framework, if the length of the THz pulse for one carrier is set to 50 ps, the bandwidth (BW) is about 20 GHz.

The effective down-conversion from the infrared (IR) band to the THz band depends on how to utilize the nonlinearity of the photoelectric converter (O/E converter). That is, for down-conversion into a desired THz band, design of the photoelectric converter (O/E converter) having the most ideal non-linearity to move to the corresponding THz band is required. If a photoelectric converter (O/E converter) which is not suitable for a target frequency band is used, there is a high possibility that an error occurs with respect to an amplitude and a phase of the corresponding pulse.

In a single carrier system, a THz transmission/reception system may be implemented using one photoelectric converter. In a multi-carrier system, as many photoelectric converters as the number of carriers may be required, which may vary depending on the channel environment. Particularly, in a multi-carrier system using multiple broadbands according to the plan related to the above-described spectrum usage, the phenomenon will be prominent. In this regard, a frame structure for the multi-carrier system may be considered. A down-frequency-converted signal based on the photoelectric converter may be transmitted in a specific resource area (e.g., a specific frame). The frequency domain of the specific resource area may include a plurality of chunks. Each chunk may consist of at least one component carrier (CC).

### Detailed description of various embodiments of the present disclosure

Various embodiments of the present disclosure are described in detail below.

In the following description, the term "satellite" refers to a low-orbit satellite on a non-terrestrial network, but the scope of the present disclosure is not limited by the expression. The term "satellite" may be used to refer to one of the general nodes in a communication system.

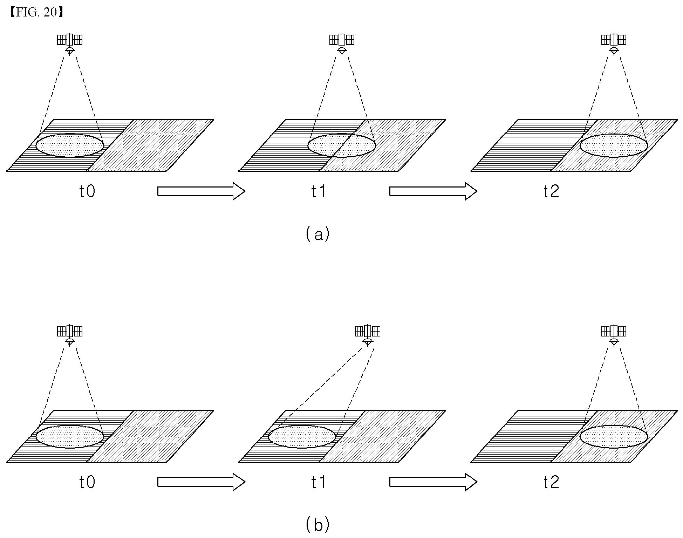

FIG. 20 illustrates an example of a non-terrestrial network applicable to the present disclosure.

More specifically, FIG. 20(a) illustrates a moving cell scenario applicable to the present disclosure, and FIG. 20(b) illustrates a fixed cell scenario applicable to the present disclosure.

Because the orbital speed of a low-orbit satellite is faster than the rotational speed of the Earth, cells formed by the low-orbit satellite in a non-terrestrial network cannot be fixed in a specific area. Due to this characteristics, a communication system in the non-terrestrial network may be defined based on either a moving cell scenario or a fixed cell scenario. In the moving cell scenario, the cell may move along with the movement of the satellite. On the other hand, in the fixed cell scenario, the cell may be fixed in a specific area for a certain period of time, and then a fixed area of the cell may change as the satellite moves, allowing the cell to be fixed to a new specific area.

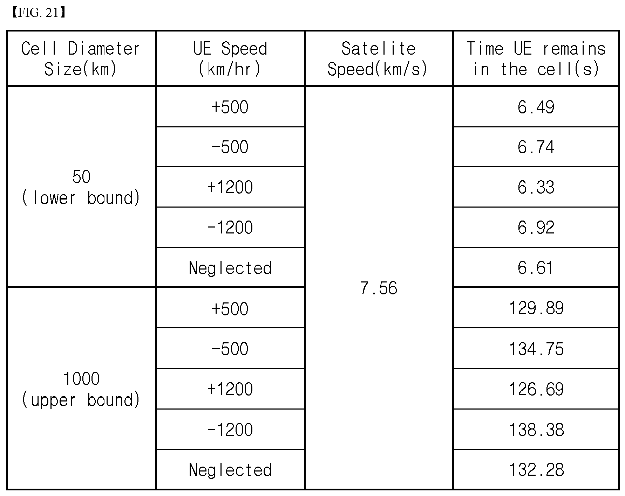

FIG. 21 illustrates a handover occurrence periodicity.

In the non-terrestrial network, even if a UE is fixed, handover to the UE may periodically occur due to a difference between the orbital speed of the low-orbit satellite and the rotational speed of the Earth. For example, the occurrence periodicity of handover to the UE in the non-terrestrial network may be determined based on the following Equation 1.

$Time to HO \left(s\right) = \frac{cell size \left(km\right)}{UE speed \left(\frac{km}{hr}\right) ⋅ \left(\frac{1 hr}{3600 s}\right) + satellite speed \left(\frac{km}{s}\right)}$

In Equation 1, "cell size" may refer to the size of the cell, "UE speed" may refer to a moving speed of the UE, and "satellite speed" may refer to the moving speed of the low-orbit satellite.

For example, in the moving cell scenario, for the low orbit satellite at an altitude of 600 km, the satellite speed may be about 7.56 km/s. FIG. 21 illustrates a handover occurrence periodicity of the UE that varies depending on the speed of the UE. FIG. 21 is based on the assumption of the moving cell scenario, but in the fixed cell scenario, the moving speed of the UE does not affect the handover periodicity. Therefore, "neglected" illustrated in FIG. 21 may refer to the handover periodicity in the fixed cell scenario.

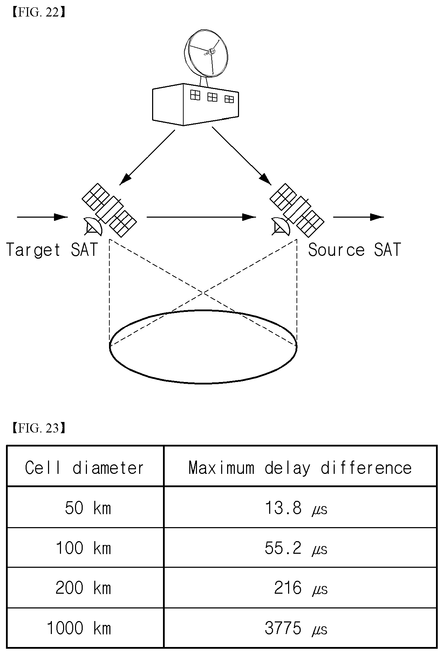

FIG. 22 illustrates an example of satellite switching applicable to the present disclosure. FIG. 23 illustrates a delay difference based on a cell size.

In the non-terrestrial network, the connection between a base station or a gateway and a satellite may be called a feeder link, and the connection between a UE and a satellite may be called a service link. FIG. 22 is based on the assumption of the fixed cell scenario. In the fixed cell scenario, a maximum delay difference of the service link generated when switching the service link may be determined based on at least one of the cell size and the satellite altitude. In this instance, the maximum delay difference of the service link may be caused by a UE located at an edge of the cell.

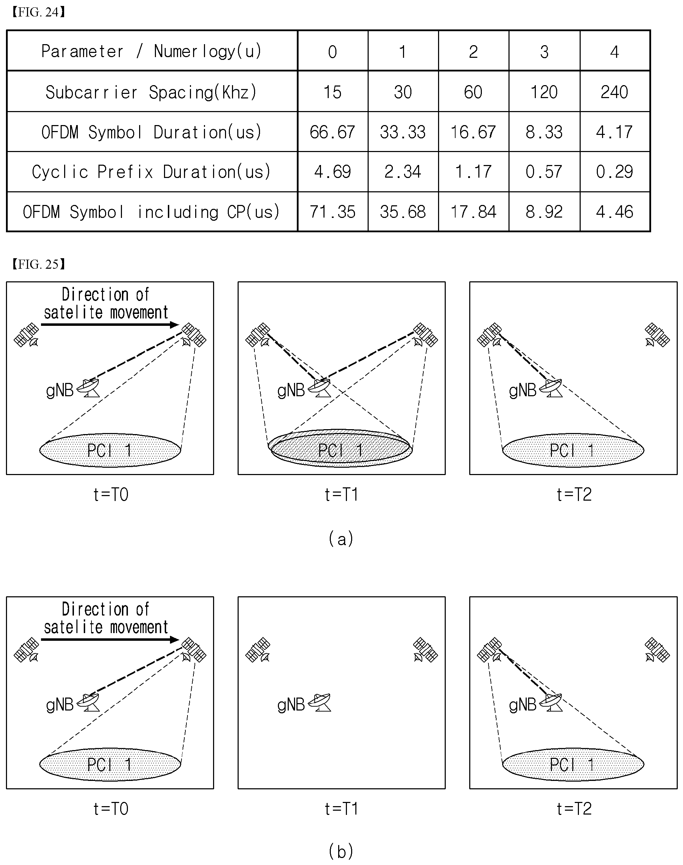

FIG. 24 illustrates features of a symbol based on a subcarrier spacing.

More specifically, FIG. 24 illustrates a symbol duration and a cyclic prefix (CP) duration that may vary depending on a subcarrier spacing. Referring to FIGS. 23 and 24, it can be seen that the maximum delay difference is greater than a length of the CP, which means that when switching the service link, if two satellites support the same cell at the same time, they may act as interference to each other.

FIG. 25 illustrates another example of satellite switching applicable to the present disclosure.

In the fixed cell scenario, switching to the satellite may be divided into soft switching and hard switching. FIG. 25(a) illustrates a soft switching scheme, and FIG. 25(b) illustrates a hard switching scheme. The two schemes may be distinguished based on whether there is a time when two satellites simultaneously support a specific cell in a process of performing switching to the cell.

According to the hard switching, physical interference effect can be blocked, but channel changes caused by blocking or paths cannot be known in advance before the satellite switches. Therefore, channel measurement shall be performed after switching. On the other hand, according to the soft switching, channel measurement is performed in advance before switching, and thus a Modulation and Coding Scheme (MCS) can be configured suitable for the target satellite at the same time as the switching. Therefore, uninterrupted service is possible, but there is a problem that interference may occur.

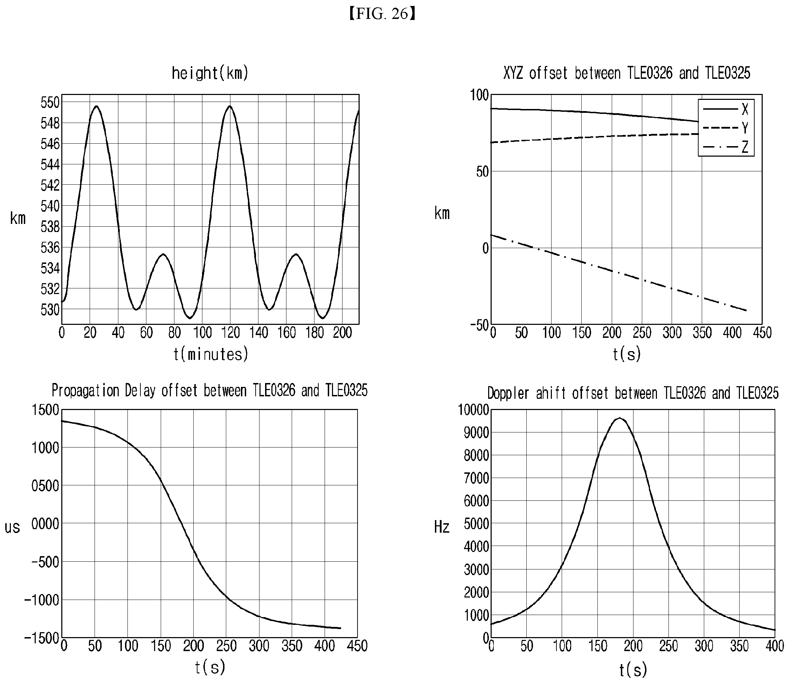

FIG. 26 illustrates features of a non-terrestrial network satellite.

In a non-terrestrial network, values related to Doppler shift and timing advance may change in real time based on the movement of the satellite. Therefore, global navigation satellite system (GNSS) data and satellite orbit data may be utilized to maintain synchronization using time/frequency compensation based on location information.

According to the present disclosure, instead of using high-precision orbit models, orbit models of Simplified General Perturbations (SGP) and Space Data Processor (SDP) series, which apply the concept of average orbits capable of minimizing computational complexity, may be used for satellite tracking. Orbit data generated by these orbit models may be provided in Two-Line Element Set (TLE) format. Since errors may continuously occur in the average orbit model, TLE values need to be periodically updated.

FIG. 26 illustrates location errors, delay offset, and Doppler shift offset when the TLE values of two satellites, which are separated by 24 hours, are applied to the Simplified General Perturbations 4 (SGP4) model. Referring to FIG. 26, it can be seen that when the TLE values are updated at 24-hour intervals, a delay error of a satellite orbit prediction value is approximately +/-1.5 ms, and the Doppler error is approximately +/- 5 ppm.

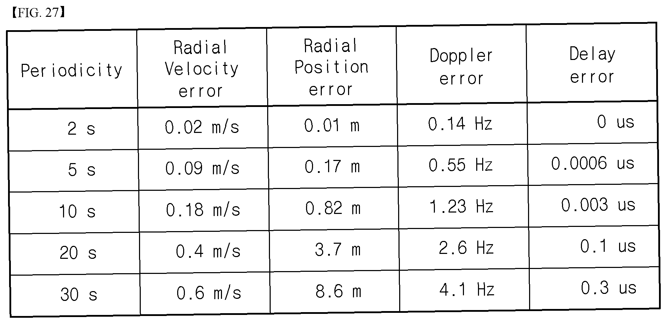

FIG. 27 illustrates features of a non-terrestrial network satellite based on a satellite orbit update cycle.

FIG. 27 illustrates the Doppler error and delay error values based on a satellite orbit update cycle. Satellite orbit data can be periodically tracked through Ephemeris of SIB19 NTN-Config added in 3GPP Rel-17. If the TLE update cycle is set so that the delay error is within the CP length, this may be used for time synchronization.

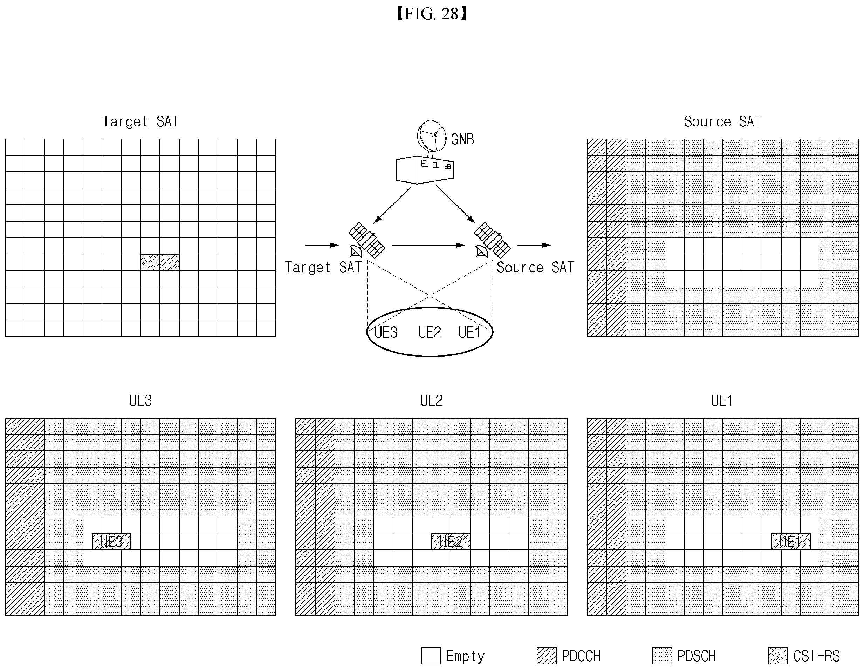

A method of performing switching in a non-terrestrial network according to various embodiments of the present disclosure is described in detail below with reference to FIGS. 28 to 32.

In the non-terrestrial network, switching of a low-orbit satellite supporting services may periodically occur due to a difference between the orbital speed of the satellite and the rotational speed of the Earth. For example, the switching of the satellite may occur every 6 to 120 seconds. In a closed cell scenario, there may be cases where all UEs in a cell shall be switched from a source satellite to a target satellite within a certain time. In this case, a problem for RACH resources may occur when performing the handover. In the closed-cell scenario, when only the satellite is switched without changing the base station, if the UE can avoid performing the handover, effects of reduction in the signaling overhead and service interruption time can be obtained.

In order for the UE to seamlessly switch to a target satellite path without interrupting the connection in a state in which the UE is connected to the base station via a source satellite path without performing the handover, the problem for synchronization and channel quality information report shall be resolved. In this instance, since a delay difference between the two satellite paths can exceed the CP, the UE may basically require an additional process of synchronizing with the target satellite.

According to various embodiments of the present disclosure, synchronization of the target satellite path may be performed using values based on source satellite and target satellite orbit information and location information of the UE. The following describes a method for performing channel state information (CSI) measurement on the target satellite and reducing interference when the satellite connection to the UE is switched without changing the base station in a closed cell scenario.

FIG. 28 illustrates a puncturing pattern applicable to the present disclosure.

More specifically, FIG. 28 illustrates an example where a UE receives services through a source satellite and at the same time receives Channel State Information Reference Signal (CSI-RS) of a target satellite. According to FIG. 26, the target satellite may transmit only the CSI-RS for CSI measurement to the UE, and the source satellite may support services to the UE by utilizing the remaining resources while leaving only resources where the CSI-RS can be located. Hereinafter, a resource deployment pattern in which the resources are left empty so that the CSI-RS resources can be located may be referred to as a puncturing pattern.

In FIG. 28, a resource deployment of UE2 illustrates a resource deployment when the UE is located at the center of a cell. In this case, since the delay difference between the two satellites may be a value close to zero, the UE may receive CSI-RS in the same resource as CSI-RS resource transmitted from the target satellite. However, in the case of a UE located at an edge of the cell, a large delay difference may occur as described in FIG. 23. In this case, the UE may receive the CSI-RS before or after the timing that has been aligned with the source satellite. In FIG. 28, UE1 illustrates a situation where the UE receives CSI-RS at a later timing than the reference, and UE3 illustrates a situation where the UE receives at an earlier timing than the reference.

An embodiment of the present disclosure proposes puncturing symbols in an interval where CSI-RS can be received by considering the maximum delay difference and the symbol duration in order to minimize interference between the two satellites. The source satellite resource deployment of FIG. 28 illustrates an example of puncturing a resource area in which CSI-RS is received. Using Equation 2 below, the number of symbols ±b to be punctured based on the resources, in which CSI-RS is allocated, may be derived. Because a frequency offset may occur due to a difference in Doppler shift between the source satellite and the target satellite, a guard band may be allocated as many as one or more subcarriers, as in the resource deployments of UE1 and UE3 of FIG. 28. According to the present disclosure, interference caused by CSI-RS can be reduced by the guard band.

$b = \left⌈MDD/\left(\frac{1}{SCS}+c\right)\right⌉$

In Equation 2, MDD may be the maximum value of the delay difference caused by the path difference between the source satellite and the target satellite in the cell, and may be in units of seconds (sec). SCS may denote a subcarrier spacing and may be in units of Hertz (Hz). C may denote the CP length and may be in units of seconds (sec).

According to FIG. 27, the UE may know which symbols CSI-RS of the target satellite is located in, using GNSS information and satellite orbit information. However, since the UE is time-synchronized with the source satellite, a symbol boundary of the UE may not coincide with a CSI-RS symbol boundary of the target satellite, as illustrated in UE1 and UE3 of FIG. 28.

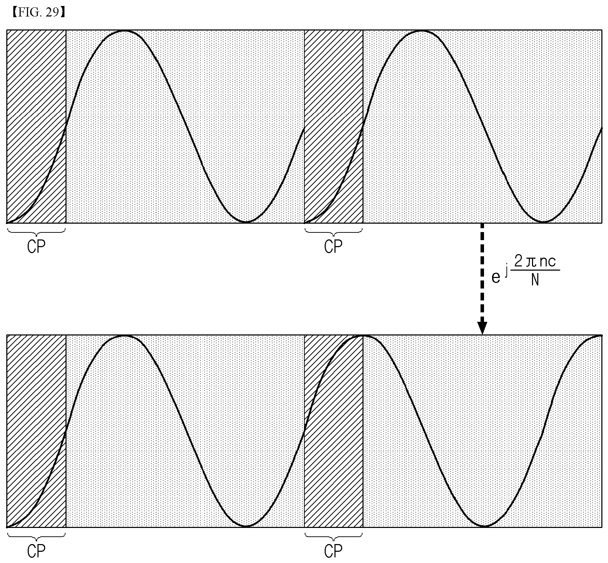

FIG. 29 illustrates a cyclic prefix (CP) applicable to the present disclosure.

FIG. 29 illustrates first and second consecutive symbols of a specific subcarrier after CP is inserted, and two symbols in which a phase shift is applied to the second symbol to maintain continuity.

If a delay difference greater than or equal to the CP length occurs in a general signal, the orthogonality between subcarriers is broken, and inter-carrier interference (ICI) may occur. However, as illustrated in FIG. 29, if the second symbol is phase-shifted to be consecutive with the first symbol, the effect similar to that the CP of the signal is extended can be obtained. For example, if the value is set as in Equation 3 below, signals of the consecutive symbols may be configured to be continuous.

${S}_{e - 1} = {S}_{0} {e}^{j \frac{2 πnc \left(e-1\right)}{N}}$

In Equation 3, *S*_{*e*-1} may be a modulation value of an e-th symbol among consecutive symbols of an nth subcarrier.

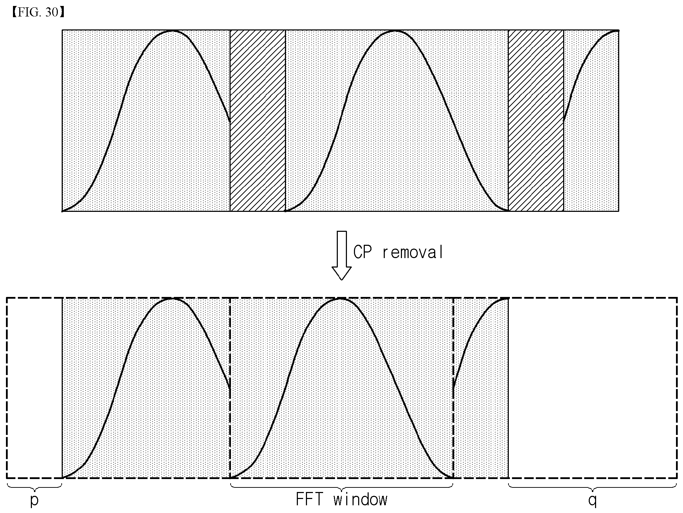

FIG. 30 illustrates an example of consecutive symbols to which the present disclosure is applied.

FIG. 30 illustrates consecutive symbols of any FFT window. When signals of consecutive symbols are continuously configured based on Equation 3, the UE may receive one or more complete symbols in any FFT window as illustrated in FIG. 30. That is, according to the present disclosure, the UE may receive a complete CSI-RS regardless of the delay difference value, even if the UE is not time-synchronized with the target satellite.

However, a null interval may occur in a first symbol and a last symbol, and thus the orthogonality between subcarriers may be broken, and inter-carrier interference (ICI) may occur. In this case, all subcarriers where CSI-RS is located may include the same null interval, and the inter-carrier interference caused by the interval may be derived according to Equations 4 and 5 below. According to Equation 4, inter-carrier interference caused by a null interval of a first symbol of an l-th subcarrier may be induced. According to Equation 5, inter-carrier interference caused by a null interval of a last symbol of the l-th subcarrier may be induced.
$\begin{matrix}\overline{{a}_{l}} = {\sum }_{t} {\sum }_{n = p}^{N - 1} {H}_{t} {X}_{t} {e}^{j \frac{2 π \left(t-l\right) n}{N}} \\ {\sum }_{n = p}^{N - 1} {e}^{j \frac{2 π \left(t-l\right) n}{N}} \neq 0 \to ICI generation\end{matrix}$

$\begin{matrix}\overline{{a}_{l}} = {\sum }_{t} {\sum }_{n = 0}^{q - 1} {H}_{t} {X}_{t} {e}^{j \frac{2 π \left(t-l\right) n}{N}} \\ {\sum }_{n = 0}^{q - 1} {e}^{j \frac{2 π \left(t-l\right) n}{N}} \neq 0 \to ICI generation\end{matrix}$

In Equations 4 and 5, N may denote FFT/IFFT size, 0 to (p-1) may denote the null interval of the first symbol, and (q-1) to N may denote the null interval of the last symbol. *Xₖ* may denote a CSI-RS signal assigned to a kth subcarrier, and *Hₖ* may denote a channel function. The subcarrier in which CSI-RS is located may be defined by t ∈ {0,1, ... , N - 1}.

To eliminate the inter-carrier interference caused by the null intervals, the UE may store the first symbol in a buffer and then perform demodulation starting from the second symbol to estimate channel information and null intervals of the first and last symbols. Through this, the UE may generate a time domain signal of the incomplete CSI-RS estimated in the first and last symbols and then cancel the CSI-RS from the original signal. The UE may differently configure only the null interval in the last symbol and cancel the incomplete CSI-RS time domain signal from the CSI-RS in the same way as the first symbol. The estimation and cancellation of the incomplete CSI-RS time domain signal may be performed according to Equations 6 to 9 below.

For example, the current channel may be estimated based on Equation 6.

$\hat{{H}_{k}} = \frac{{Y}_{k}}{{X}_{k}} \left({X}_{k}\neq 0\right)$

For example, the time domain signal of incomplete CSI-RS estimated in the first and last symbols may be derived based on Equations 7 and 8.

$\hat{{y}_{n}} = {\sum }_{t} {\sum }_{n = p}^{N - 1} {Y}_{t} {e}^{j \frac{2 πnt}{N}} {e}^{- j \frac{2 πnc}{N}}$

$\hat{{y}_{n}} = {\sum }_{t} {\sum }_{n = 0}^{q - 1} {Y}_{t} {e}^{j \frac{2 πnt}{N}} {e}^{j \frac{2 πnc \left(e-2\right)}{N}}$

For example, the incomplete CSI-RS time domain signal may be cancelled according to Equation 9.

${y}_{n}^{′} = {y}_{n} - \hat{{y}_{n}}$

In Equations 6 to 9, yₙ may denote the time domain signal received in the first or last symbol, and *Yₖ* may denote a value received in a second symbol of a k-th subcarrier.

A UE with the above-described interference cancellation capability and a UE without the interference cancellation capability may coexist in a cell. The UE with the interference cancellation capability may be allocated resources on PDSCH of a punctured symbol, but the UE without the interference cancellation capability may not be allocated resources on PDSCH of a punctured symbol.

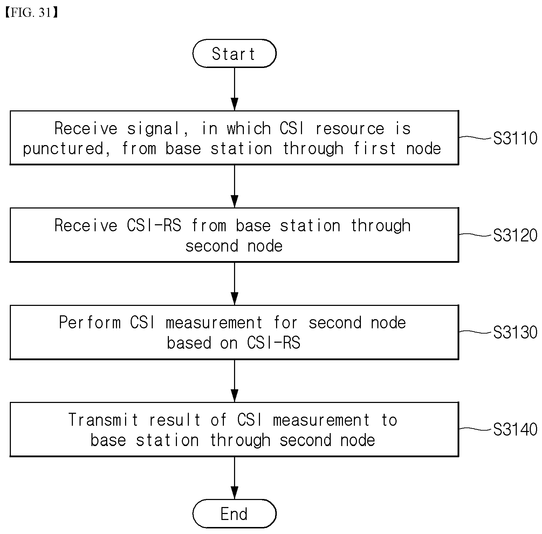

FIG. 31 illustrates an example of a method for a UE to perform switching in a system applicable to the present disclosure.

Below, the above-described embodiments are described in detail from an operation perspective of a user equipment (UE) with reference to FIG. 31. Methods to be described below are merely distinguished for convenience of explanation. Thus, as long as the methods are not mutually exclusive, it is obvious that partial configuration of any method can be substituted or combined with partial configuration of another method.

According to various embodiments of the present disclosure, a first node, a second node, and each of a plurality of nodes may correspond to one of a source satellite, a target satellite, a UE, or a base station in a wireless communication system. For example, the first node may be the source satellite, and the second node may be the target satellite.

Referring to FIG. 31, a method for a UE to perform switching in a communication system applicable to the present disclosure may comprise a step S3110 of receiving, from a base station (BS), a signal in which a channel state information (CSI) resource is punctured through a first node, a step S3120 of receiving, from the base station, a CSI-RS based on the CSI resource through a second node, a step S3130 of performing a CSI measurement for the second node based on the CSI-RS, and a step S3140 of transmitting, to the base station, a result of the CSI measurement through the second node.

A reception timing of the signal and a reception timing of the CSI-RS may be based on at least one of the first node, the second node, or a location of the UE.

According to various embodiments of the present disclosure, the UE may be switched from being connected to the base station through the first node to being connected to the base station through the second node.

According to various embodiments of the present disclosure, the UE may be connected to the base station through the second node without a handover from the first node to the second node.

According to various embodiments of the present disclosure, the UE may be connected to the base station through the second node without synchronization to the second node.

According to various embodiments of the present disclosure, the CSI-RS may be received through the punctured CSI resource in the signal.

According to various embodiments of the present disclosure, the reception timing of the signal and the reception timing of the CSI-RS may be based on at least one of first satellite orbit information of the first node, second satellite orbit information of the second node, or the location of the UE.

According to various embodiments of the present disclosure, a delay difference related to a path difference between the first node and the second node may be greater than a cyclic prefix (CP) length, and the delay difference may be based on at least one of the first satellite orbit information, the second satellite orbit information, or the location of the UE.

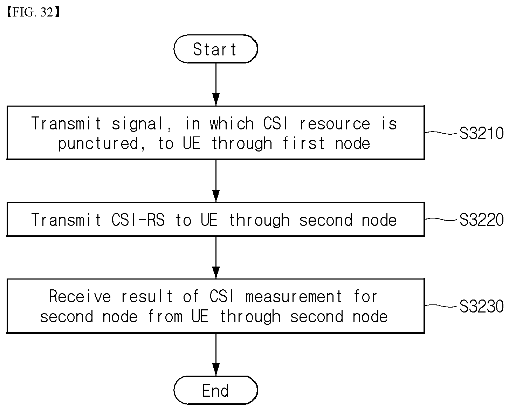

According to various embodiments of the present disclosure, there may be provided a user equipment (UE) in a communication system. The UE may include a transceiver and at least one processor, and the at least one processor may be configured to perform the operation method of the first node based on FIG. 32.

According to various embodiments of the present disclosure, there may be provided a device controlling a user equipment (UE) in a communication system. The device may include at least one processor and at least one memory operably connected to the at least one processor. The at least one memory may be configured to store instructions performing the operation method of the UE based on FIG. 31 based on being executed by the at least one processor.

According to various embodiments of the present disclosure, there may be provided one or more non-transitory computer readable mediums (CRMs) storing one or more instructions. The one or more instructions may be configured to perform operations based on being executed by one or more processors, and the operations may include the operation method of the UE based on FIG. 31.

The above embodiment describes a situation in which the base station separately exists in addition to the first node and the second node, but other embodiments according to the present disclosure may also be applied in a situation in which no base station exists. For example, the UE may directly receive a signal, in which the CSI resource is punctured, from the first node and transmit a result of the CSI resource measurement to the second node based on the received CSI resource. The UE may directly receive a signal in which a CSI resource generated by the source satellite is punctured, and transmit a result of the CSI resource measurement to the target satellite based on the received CSI resource. That is, the UE may perform switching from the first node to the second node without a separate handover process in a situation in which no separate base station exists.

In addition, in a situation where no separate base station is defined, the first node and the second node may be replaced by a first base station and a second base station, respectively. For example, the UE may receive a signal, in which CSI resource is punctured, from the first base station and transmit a result of CSI resource measurement to the second base station based on the received CSI resource. That is, the UE may perform switching from the first base station to the second base station without a separate handover process.

FIG. 32 illustrates an example of a method for a base station to support switching of a UE in a system applicable to the present disclosure.

Below, the above-described embodiments are described in detail from a perspective of an operation of a base station with reference to FIG. 32. Methods to be described below are merely distinguished for convenience of explanation. Thus, as long as the methods are not mutually exclusive, it is obvious that partial configuration of any method can be substituted or combined with partial configuration of another method.

According to various embodiments of the present disclosure, a first node, a second node, and each of a plurality of nodes may correspond to one of a source satellite, a target satellite, a UE, or a base station in a wireless communication system. For example, the first node may be the source satellite, and the second node may be the target satellite.

Referring to FIG. 32, a method for a base station to perform switching in a communication system applicable to the present disclosure may comprise a step S3210 of transmitting, to a user equipment (UE), a signal in which a channel state information (CSI) resource is punctured through a first node, a step S3220 of transmitting, to the UE, a CSI-RS based on the CSI resource through a second node, and a step S3230 of receiving, from the UE, a result of CSI measurement for the second node based on the CSI-RS through the second node.

A transmission timing of the signal and a transmission timing of the CSI-RS may be based on at least one of the first node, the second node, or a location of the UE.

According to various embodiments of the present disclosure, the UE may be switched from being connected to the base station through the first node to being connected to the base station through the second node.

According to various embodiments of the present disclosure, the UE may be connected to the base station through the second node without a handover from the first node to the second node.

According to various embodiments of the present disclosure, the UE may be connected to the base station through the second node without synchronization to the second node.

According to various embodiments of the present disclosure, the CSI-RS may be received through the punctured CSI resource in the signal.

According to various embodiments of the present disclosure, the transmission timing of the signal and the transmission timing of the CSI-RS may be based on at least one of first satellite orbit information of the first node, second satellite orbit information of the second node, or the location of the UE.

According to various embodiments of the present disclosure, a delay difference related to a path difference between the first node and the second node may be greater than a cyclic prefix (CP) length, and the delay difference may be based on at least one of the first satellite orbit information, the second satellite orbit information, or the location of the UE.

According to various embodiments of the present disclosure, there may be provided a base station in a communication system. The base station may include a transceiver and at least one processor, and the at least one processor may be configured to perform the operation method of the base station based on FIG. 32.

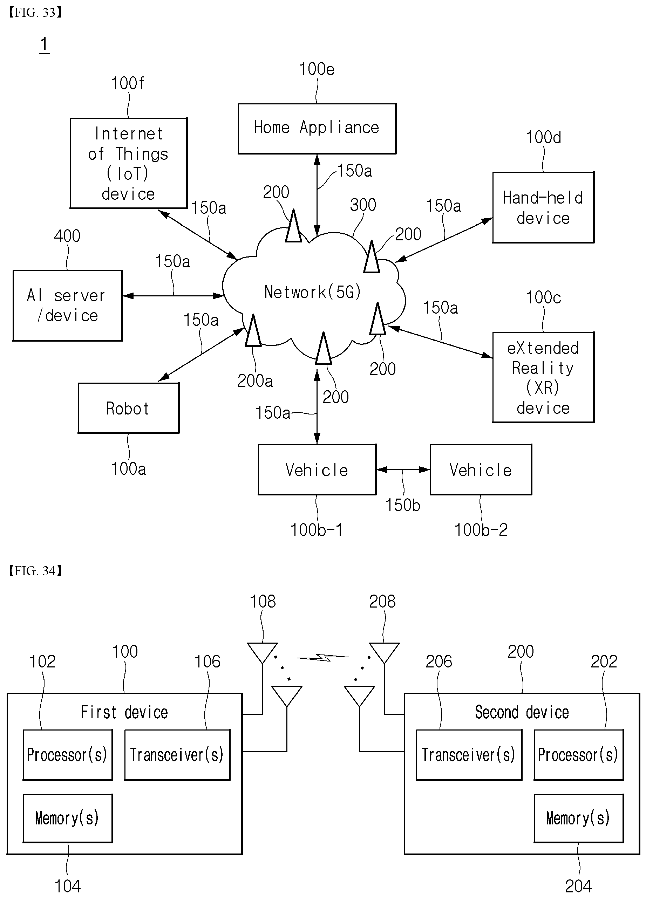

According to various embodiments of the present disclosure, there may be provided a device controlling a base station in a communication system. The device may include at least one processor and at least one memory operably connected to the at least one processor. The at least one memory may be configured to store instructions performing the operation method of the base station based on FIG. 33 based on being executed by the at least one processor.

According to various embodiments of the present disclosure, there may be provided one or more non-transitory computer readable mediums (CRMs) storing one or more instructions. The one or more instructions may be configured to perform operations based on being executed by one or more processors, and the operations may include the operation method of the base station based on FIG. 32.

According to various embodiments of the present disclosure, since the node connected to the UE can be switched from the first node (source satellite) to the second node (target satellite) without performing separate handover and synchronization with the base station, signaling overhead and service interruption time can be reduced. In addition, according to a specific embodiment of the present invention, interference caused by CSI measurement and desynchronization with respect to the target satellite during the switching can be minimized.

### Communication system applicable to the present disclosure

FIG. 33 illustrates a communication system 1 applied to various embodiments of the present disclosure.

Referring to FIG. 33, a communication system 1 applied to various embodiments of the present disclosure includes a wireless device, a base station, and a network. Herein, the wireless device refers to a device performing communication using Radio Access Technology (RAT) (e.g., 5G New RAT (NR)) or Long-Term Evolution (LTE), 6G wireless communication) and may be referred to as communication/radio/5G device/6G device. Although not limited thereto, the wireless devices may include a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BS and the network may be implemented as wireless devices and a specific wireless device 200a may operate as a BS/network node with respect to other wireless devices.

The wireless devices 100a to 100f may be connected to the network 300 via the BS 200. An Artificial Intelligence (AI) technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network, or 6G network. Although the wireless devices 100a to 100f may communicate with each other through the BS 200/network 300, the wireless devices 100a to 100f may perform direct communication (e.g., sidelink communication) with each other without passing through the BS/network. For example, the vehicles 100b-1 and 100b-2 may perform direct communication (e.g. Vehicle-to-Vehicle (V2V)/Vehicle-to-everything (V2X) communication). Additionally, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BS/the wireless device, the base station and the base station may transmit/receive radio signals to/from each other through the wireless communication/connections 150a, 150b, and 150c. For example, the wireless communication/connections 150a, 150b, and 150c may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

NR supports multiple numerology (or subcarrier spacing (SCS)) to support various 5G services. For example, when SCS is 15kHz, it supports a wide area in traditional cellular bands, and when SCS is 30kHz/60kHz, it supports dense-urban, lower latency, and wider carrier bandwidth, when SCS is 60kHz or higher, it supports bandwidth greater than 24.25GHz to overcome phase noise.

The NR frequency band can be defined as two types of frequency ranges (FR1, FR2). The values of the frequency range may be changed, for example, and the frequency ranges of the two types (FR1, FR2) may be as shown in Table 3 below. For convenience of explanation, among the frequency ranges used in the NR system, FR1 may mean "sub 6GHz range", and FR2 may mean "above 6GHz range" and may be called millimeter wave (mmW).

**[Table 3]**

| Frequency Range Designation | Corresponding Frequency Range | Subcarrier Spacing |
|---|---|---|
| FR1 | 450MHz-6000MHz | 15, 30, 60kHz |
| FR2 | 24250MHz-52600MHz | 60, 120, 240kHz |

As described above, the numerical value of the frequency range of the NR system can be changed. For example, FR1 may include a band of 410 MHz to 7125 MHz as shown in Table 4 below. That is, FR1 may include a frequency band of 6GHz (or 5850, 5900, 5925 MHz, etc.). For example, the frequency band above 6 GHz (or 5850, 5900, 5925 MHz, etc.) included within FR1 may include an unlicensed band. Unlicensed bands can be used for a variety of purposes, for example, for communications for vehicles (e.g., autonomous driving).

**[Table 4]**

| Frequency Range Designation | Corresponding Frequency Range | Subcarrier Spacing |
|---|---|---|
| FR1 | 41MHz-7125MHz | 15, 30, 60kHz |
| FR2 | 24250MHz-52600MHz | 60, 120, 240kHz |

According to various embodiments of the present disclosure, the communication system 1 may support terahertz (THz) wireless communication. THz wireless communication uses wireless communication using THz waves with a frequency of approximately 0.1 to 10 THz (1 THz = 1012 Hz), and can refer to terahertz (THz) band wireless communication using a very high carrier frequency of 100 GHz or higher. The frequency band expected to be used for THz wireless communication may be the D-band (110GHz to 170GHz) or H-band (220GHz to 325GHz) bands, which have small propagation losses due to absorption of molecules in the air.

Wireless device applicable to the present disclosure
Examples of a wireless device to which various embodiments of the present disclosure are applied are described below.

FIG. 34 illustrates a wireless device applicable to various embodiments of the present disclosure.

Referring to FIG. 34, a first wireless device 100 and a second wireless device 200 may transmit and receive radio signals through various wireless access technologies (e.g., LTE and NR). {The first wireless device 100 and the second wireless device 200} may correspond to {the wireless device 100x and the base station 200} and/or {the wireless device 100x and the wireless device 100x} of FIG. 33.

The first wireless device 100 may include one or more processors 102 and one or more memories 104 and may further include one or more transceivers 106 and/or one or more antennas 108. The processor 102 may control the memory 104 and/or the transceiver 106 and may be configured to implement the descriptions, functions, procedures, proposals, methods and/or operation flowcharts described in the present disclosure. For example, the processor 102 may process information within the memory 104 to generate first information/signal, and then transmit a radio signal including the first information/signal through the transceiver 106. Further, the processor 102 may receive a radio signal including second information/signal through the transceiver 106, and then store in the memory 104 information obtained from signal processing of the second information/signal. The memory 104 may be connected to the processor 102 and store various information related to an operation of the processor 102. For example, the memory 104 may store software codes including instructions for performing all or some of processes controlled by the processor 102 or performing the descriptions, functions, procedures, proposals, methods and/or operation flowcharts described in the present disclosure. The processor 102 and the memory 104 may be a part of a communication modem/circuit/chip designed to implement the wireless communication technology (e.g., LTE and NR). The transceiver 106 may be connected to the processor 102 and may transmit and/or receive the radio signals via one or more antennas 108. The transceiver 106 may include a transmitter and/or a receiver. The transceiver 106 may be used interchangeably with a radio frequency (RF) unit. In various embodiments of the present disclosure, the wireless device may mean the communication modem/circuit/chip.

The second wireless device 200 may include one or more processors 202 and one or more memories 204 and may further include one or more transceivers 206 and/or one or more antennas 208. The processor 202 may control the memory 204 and/or the transceiver 206 and may be configured to implement the descriptions, functions, procedures, proposals, methods and/or operation flowcharts described in the present disclosure. For example, the processor 202 may process information within the memory 204 to generate third information/signal and then transmit a radio signal including the third information/signal through the transceiver 206. Further, the processor 202 may receive a radio signal including fourth information/signal through the transceiver 206 and then store in the memory 204 information obtained from signal processing of the fourth information/signal. The memory 204 may be connected to the processor 202 and store various information related to an operation of the processor 202. For example, the memory 204 may store software codes including instructions for performing all or some of processes controlled by the processor 202 or performing the descriptions, functions, procedures, proposals, methods and/or operation flowcharts described in the present disclosure. The processor 202 and the memory 204 may be a part of a communication modem/circuit/chip designated to implement the wireless communication technology (e.g., LTE and NR). The transceiver 206 may be connected to the processor 202 and may transmit and/or receive the radio signals through one or more antennas 208. The transceiver 206 may include a transmitter and/or a receiver, and the transceiver 206 may be used interchangeably with the RF unit. In various embodiments of the present disclosure, the wireless device may mean the communication modem/circuit/chip.

Hardware elements of the wireless devices 100 and 200 are described in more detail below. Although not limited thereto, one or more protocol layers may be implemented by one or more processors 102 and 202. For example, one or more processors 102 and 202 may implement one or more layers (e.g., functional layers such as PHY, MAC, RLC, PDCP, RRC, and SDAP). One or more processors 102 and 202 may generate one or more protocol data units (PDUs) and/or one or more service data units (SDUs) based on the descriptions, functions, procedures, proposals, methods and/or operation flowcharts described in the present disclosure. One or more processors 102 and 202 may generate messages, control information, data, or information based on the descriptions, functions, procedures, proposals, methods and/or operation flowcharts described in the present disclosure. One or more processors 102 and 202 may generate a signal (e.g., a baseband signal) including the PDU, the SDU, the messages, the control information, the data, or the information based on the functions, procedures, proposals and/or methods described in the present disclosure, and provide the generated signal to one or more transceivers 106 and 206. One or more processors 102 and 202 may receive the signal (e.g., baseband signal) from one or more transceivers 106 and 206 and acquire the PDU, the SDU, the messages, the control information, the data, or the information based on the descriptions, functions, procedures, proposals, methods and/or operation flowcharts described in the present disclosure.

One or more processors 102 and 202 may be referred to as a controller, a microcontroller, a microprocessor, or a microcomputer. One or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in one or more processors 102 and 202. The descriptions, functions, procedures, proposals, methods and/or operation flowcharts described in the present disclosure may be implemented using firmware or software, and the firmware or software may be implemented to include modules, procedures, functions, and the like. Firmware or software configured to perform the descriptions, functions, procedures, proposals, methods and/or operation flowcharts described in the present disclosure may be included in one or more processors 102 and 202 or stored in one or more memories 104 and 204 and may be executed by one or more processors 102 and 202. The descriptions, functions, procedures, proposals, methods and/or operation flowcharts described in the present disclosure may be implemented using firmware or software in the form of codes, instructions and/or a set form of instructions.

The one or more memories 104 and 204 may be connected to the one or more processors 102 and 202 and store various types of data, signals, messages, information, programs, codes, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located inside and/or outside the one or more processors 102 and 202. The one or more memories 104 and 204 may be connected to the one or more processors 102 and 202 through various technologies such as wired or wireless connection.

The one or more transceivers 106 and 206 may transmit, to one or more other devices, user data, control information, radio signals/channels, etc. mentioned in the methods and/or operation flowcharts of the present disclosure. The one or more transceivers 106 and 206 may receive, from the one or more other devices, the user data, control information, radio signals/channels, etc. mentioned in the descriptions, functions, procedures, proposals, methods and/or operation flowcharts described in the present disclosure. For example, the one or more transceivers 106 and 206 may be connected to the one or more processors 102 and 202 and transmit and receive radio signals. For example, the one or more processors 102 and 202 may control the one or more transceivers 106 and 206 to transmit the user data, control information, or radio signals to the one or more other devices. The one or more processors 102 and 202 may control the one or more transceivers 106 and 206 to receive the user data, control information, or radio signals from the one or more other devices. The one or more transceivers 106 and 206 may be connected to the one or more antennas 108 and 208, and the one or more transceivers 106 and 206 may be configured to transmit and receive over the one or more antennas 108 and 208 the user data, control information, radio signals/channels, etc. mentioned in the descriptions, functions, procedures, proposals, methods and/or operation flowcharts described in the present disclosure. In the present disclosure, the one or more antennas may be a plurality of physical antennas or a plurality of logical antennas (e.g., antenna ports). The one or more transceivers 106 and 206 may convert the received radio signals/channels etc. from RF band signals to baseband signals in order to process the received user data, control information, radio signals/channels, etc. using the one or more processors 102 and 202. The one or more transceivers 106 and 206 may convert the user data, control information, radio signals/channels, etc. processed using the one or more processors 102 and 202 from the baseband signals to the RF band signals. To this end, the one or more transceivers 106 and 206 may include (analog) oscillators and/or filters.

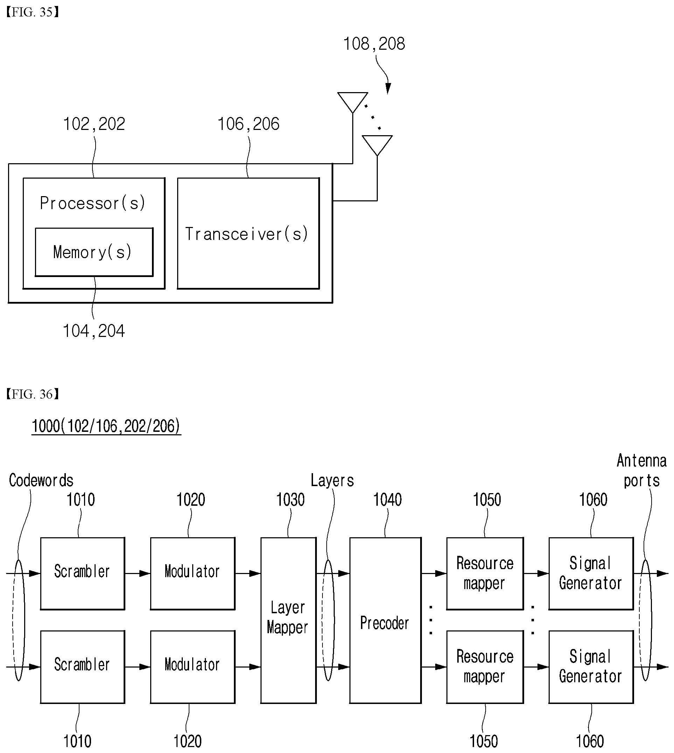

FIG. 35 illustrates another example of a wireless device applicable to various embodiments of the present disclosure.

Referring to FIG. 35, a wireless device may include at least one processor 102 and 202, at least one memory104 and 204, at least one transceiver 106 and 206, and one or more antennas 108 and 208.

The wireless device illustrated in FIG. 34 is different from the wireless device illustrated in FIG. 35 in that the processors 102 and 202 and the memories 104 and 204 are separated from each other in FIG. 34, and the processors 102 and 202 include the memories 104 and 204 in FIG. 35.

Since the detailed description for the processors 102 and 202, the memories 104 and 204, the transceivers 106 and 206, and the one or more antennas 108 and 208 is the same as that described above, repetitive descriptions are omitted to avoid unnecessary repetition of description.

Examples of a signal processing circuit to which various embodiments of the present disclosure are applied are described below.

FIG. 36 illustrates a signal processing circuit for a transmission signal.

Referring to FIG. 36, a signal processing circuit 1000 may include scramblers 1010, modulators 1020, a layer mapper 1030, a precoder 1040, resource mappers 1050, and signal generators 1060. Although not limited to this, an operation/function of FIG. 36 may be performed by the processors 102 and 202 and/or the transceivers 106 and 206 of FIG. 34. Hardware elements of FIG. 36 may be implemented by the processors 102 and 202 and/or the transceivers 106 and 206 of FIG. 34. For example, blocks 1010 to 1060 may be implemented by the processors 102 and 202 of FIG. 34. Further, the blocks 1010 to 1050 may be implemented by the processors 102 and 202 of FIG. 34, and the block 1060 may be implemented by the transceivers 106 and 206 of FIG. 34.

Codewords may be converted into radio signals via the signal processing circuit 1000 of FIG. 36. The codewords are encoded bit sequences of information blocks. The information blocks may include transport blocks (e.g., a UL-SCH transport block, a DL-SCH transport block). The radio signals may be transmitted via various physical channels (e.g., PUSCH, PDSCH, etc.).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W, where N is the number of antenna ports, and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols, and the generated radio signals may be transmitted to other devices over each antenna. To this end, the signal generators 1060 may include inverse fast Fourier transform (IFFT) modules, cyclic prefix (CP) inserters, digital-to-analog converters (DACs), and frequency up-converters.

Signal processing procedures for a received signal in the wireless device may be configured in a reverse manner of the signal processing procedures 1010 to 1060 of FIG. 36. For example, the wireless devices (e.g., 100 and 200 of FIG. 34) may receive radio signals from the exterior through the antenna ports/transceivers. The received radio signals may be converted into baseband signals through signal restorers. To this end, the signal restorers may include frequency down-converters, analog-to-digital converters (ADCs), CP remover, and fast Fourier transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

Examples of use of a wireless device to which various embodiments of the present disclosure are applied are described below.

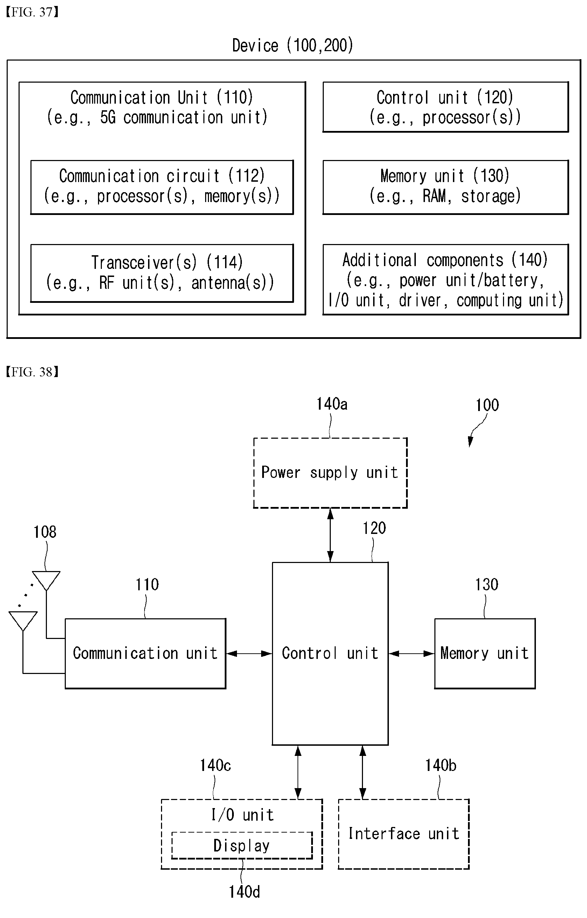

FIG. 37 illustrates another example of a wireless device applied to various embodiments of the present disclosure. The wireless device may be implemented in various forms based on use cases/services (see FIG. 33).

Referring to FIG. 37, wireless devices 100 and 200 may correspond to the wireless devices 100 and 200 of FIG. 34 and may consist of various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 34. For example, the transceiver(s) 114 may include the one or more transceivers 106 and 206 and/or the one or more antennas 108 and 208 of FIG. 34. The control unit 120 is electrically connected to the communication unit 110, the memory 130, and the additional components 140 and controls overall operation of the wireless devices. For example, the control unit 120 may control an electric/mechanical operation of the wireless device based on programs/codes/instructions/information stored in the memory unit 130. The control unit 120 may transmit the information stored in the memory unit 130 to the exterior (e.g., other communication devices) through the communication unit 110 via a wireless/wired interface or store, in the memory unit 130, information received via the wireless/wired interface from the exterior (e.g., other communication devices) through the communication unit 110.

The additional components 140 may be variously configured based on types of wireless devices. For example, the additional components 140 may include at least one of a power unit/battery, input/output (I/O) unit, a driving unit, and a computing unit. The wireless device may be implemented in the form of the robot (100a of FIG. 33), the vehicles (100b-1 and 100b-2 of FIG. 33), the XR device (100c of FIG. 35), the hand-held device (100d of FIG. 33), the home appliance (100e of FIG. 33), the IoT device (100f of FIG. 33), a digital broadcast terminal, a hologram device, a public safety device, an MTC device, a medicine device, a fintech device (or a finance device), a security device, a climate/environment device, the AI server/device (400 of FIG. 33), the BSs (200 of FIG. 33), a network node, etc., but is not limited thereto. The wireless device may be used in a mobile or fixed place based on a use-example/service.

In FIG. 37, all the various elements, components, units/parts, and/or modules of the wireless devices 100 and 200 may be connected to each other via wired interfaces or at least a part thereof may be wirelessly connected through the communication unit 110. For example, in each of the wireless devices 100 and 200, the control unit 120 and the communication unit 110 may be connected by wire, and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may consist of a set of one or more processors. As an example, the control unit 120 may include a set of a communication control processor, an application processor, an electronic control unit (ECU), a graphical processing unit, and a memory control processor. As another example, the memory 130 may include a random access memory (RAM), a dynamic RAM (DRAM), a read only memory (ROM)), a flash memory, a volatile memory, a non-volatile memory, and/or a combination thereof.

Examples of implementation of FIG. 37 are described in more detail below.

FIG. 38 illustrates a hand-held device applied to various embodiments of the present disclosure. The hand-held device may include a smartphone, a smartpad, a wearable device (e.g., a smartwatch or a smartglasses), or a portable computer (e.g., a notebook). The mobile device may be referred to as a mobile station (MS), a user terminal (UT), a mobile subscriber station (MSS), a subscriber station (SS), an advanced mobile station (AMS), or a wireless terminal (WT).

Referring to FIG. 38, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 37, respectively.

The communication unit 110 may transmit and receive signals (e.g., data and control signals) to and from other wireless devices or BSs. The control unit 120 may perform various operations by controlling components of the hand-held device 100. The control unit 120 may include an application processor (AP). The memory unit 130 may store data/parameters/programs/codes/instructions needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, for data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

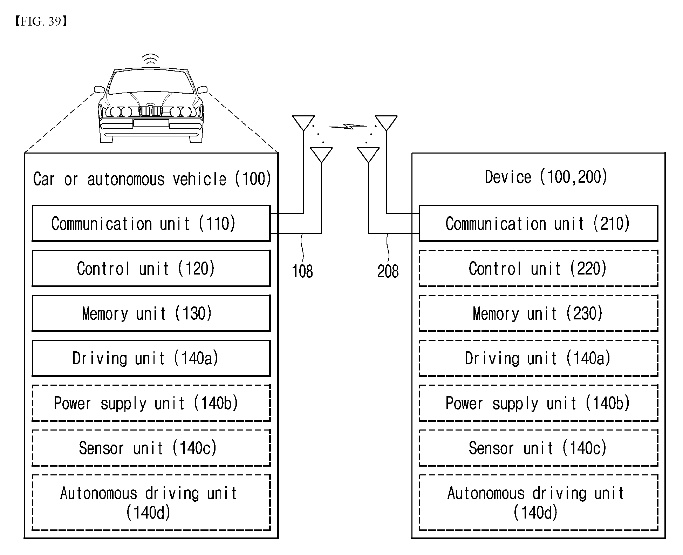

FIG. 39 illustrates a vehicle or an autonomous vehicle applied to various embodiments of the present disclosure.

The vehicle or autonomous vehicle may be implemented by a mobile robot, a car, a train, a manned/unmanned Aerial Vehicle (AV), a ship, etc.

Referring to FIG. 39, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 37, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an electronic control unit (ECU). The driving unit 140a may allow the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a so that the vehicle or the autonomous vehicle 100 moves along the autonomous driving path based on the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transmit information on a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

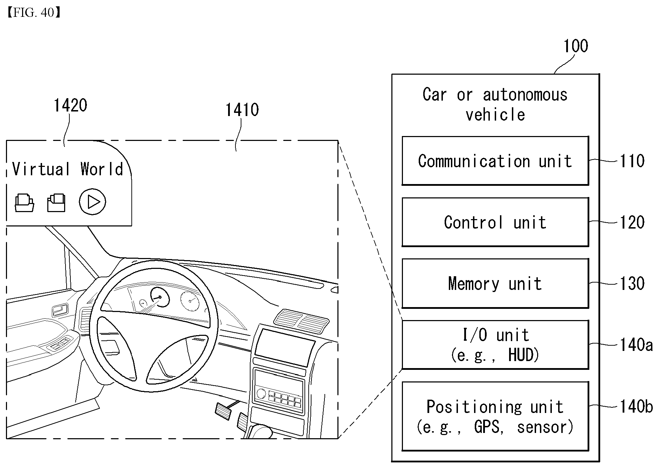

FIG. 40 illustrates a vehicle applied to various embodiments of the present disclosure. The vehicle may be implemented as a transport means, a train, an aerial vehicle, a ship, etc.

Referring to FIG. 40, a vehicle 100 may include a communication unit 110, a control unit 120, a memory unit 130, an I/O unit 140a, and a positioning unit 140b. The blocks 110 to 130/140a and 140b correspond to blocks 110 to 130/140 of FIG. 37, respectively.

The communication unit 110 may transmit and receive signals (e.g., data and control signals) to and from external devices such as other vehicles or base stations. The control unit 120 may perform various operations by controlling components of the vehicle 100. The memory unit 130 may store data/parameters/programs/codes/instructions for supporting various functions of the vehicle 100. The I/O unit 140a may output an AR/VR object based on information within the memory unit 130. The I/O unit 140a may include an HUD. The positioning unit 140b may acquire location information of the vehicle 100. The location information may include absolute location information of the vehicle 100, location information of the vehicle 100 within a traveling lane, acceleration information, and location information of the vehicle 100 from a neighboring vehicle. The positioning unit 140b may include a GPS and various sensors.

As an example, the communication unit 110 of the vehicle 100 may receive map information and traffic information from an external server and store the received information in the memory unit 130. The positioning unit 140b may obtain vehicle location information through the GPS and the various sensors and store the obtained information in the memory unit 130. The control unit 120 may generate a virtual object based on the map information, the traffic information, and the vehicle location information, and the I/O unit 140a may display the generated virtual object on a window in the vehicle (1410 and 1420). The control unit 120 may determine whether the vehicle 100 normally drives within a traveling lane, based on the vehicle location information. If the vehicle 100 abnormally exits from the traveling lane, the control unit 120 may display a warning on the window in the vehicle through the I/O unit 140a. In addition, the control unit 120 may broadcast a warning message about driving abnormity to neighboring vehicles through the communication unit 110. According to situations, the control unit 120 may transmit the location information of the vehicle and the information about driving/vehicle abnormality to related organizations through the communication unit 110.

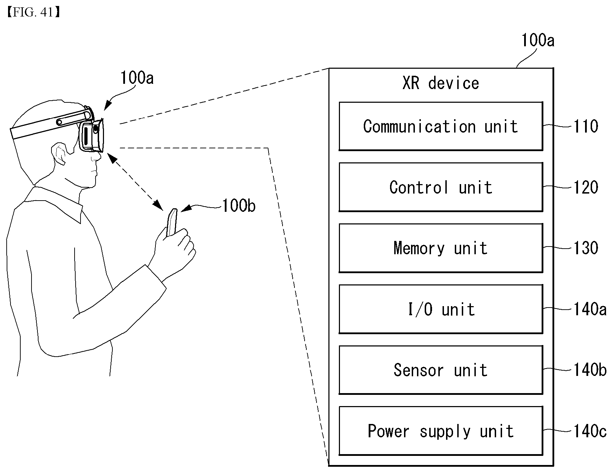

FIG. 41 illustrates an XR device applied to various embodiments of the present disclosure. The XR device may be implemented as an HMD, a head-up display (HUD) mounted in a vehicle, a television, a smartphone, a computer, a wearable device, a home appliance, a digital signage, a vehicle, a robot, etc.

Referring to FIG. 41, an XR device 100a may include a communication unit 110, a control unit 120, a memory unit 130, an I/O unit 140a, a sensor unit 140b, and a power supply unit 140c. The blocks 110 to 130/140a to 140c correspond to the blocks 110 to 130/140 of FIG. 37, respectively.

The communication unit 110 may transmit and receive signals (e.g., media data, control signal, etc.) to and from external devices such as other wireless devices, handheld devices, or media servers. The media data may include video, images, sound, etc. The control unit 120 may control components of the XR device 100a to perform various operations. For example, the control unit 120 may be configured to control and/or perform procedures such as video/image acquisition, (video/image) encoding, and metadata generation and processing. The memory unit 120 may store data/parameters/programs/codes/instructions required to drive the XR device 100a/generate an XR object. The I/O unit 140a may obtain control information, data, etc. from the outside and output the generated XR object. The I/O unit 140a may include a camera, a microphone, a user input unit, a display, a speaker, and/or a haptic module. The sensor unit 140b may obtain a state, surrounding environment information, user information, etc. of the XR device 100a. The sensor 140b may include a proximity sensor, an illumination sensor, an acceleration sensor, a magnetic sensor, a gyro sensor, an inertial sensor, an RGB sensor, an IR sensor, a fingerprint scan sensor, an ultrasonic sensor, a light sensor, a microphone, and/or a radar. The power supply unit 140c may supply power to the XR device 100a and include a wired/wireless charging circuit, a battery, etc.

For example, the memory unit 130 of the XR device 100a may include information (e.g., data) required to generate the XR object (e.g., an AR/VR/MR object). The I/O unit 140a may obtain instructions for manipulating the XR device 100a from a user, and the control unit 120 may drive the XR device 100a based on a driving instruction of the user. For example, if the user desires to watch a film, news, etc. through the XR device 100a, the control unit 120 may transmit content request information to another device (e.g., a handheld device 100b) or a media server through the communication unit 110. The communication unit 110 may download/stream content such as films and news from another device (e.g., the handheld device 100b) or the media server to the memory unit 130. The control unit 120 may control and/or perform procedures, such as video/image acquisition, (video/image) encoding, and metadata generation/processing, for the content and generate/output the XR object based on information about a surrounding space or a real object obtained through the I/O unit 140a/sensor unit 140b.

The XR device 100a may be wirelessly connected to the handheld device 100b through the communication unit 110, and the operation of the XR device 100a may be controlled by the handheld device 100b. For example, the handheld device 100b may operate as a controller of the XR device 100a. To this end, the XR device 100a may obtain 3D location information of the handheld device 100b and generate and output an XR object corresponding to the handheld device 100b.

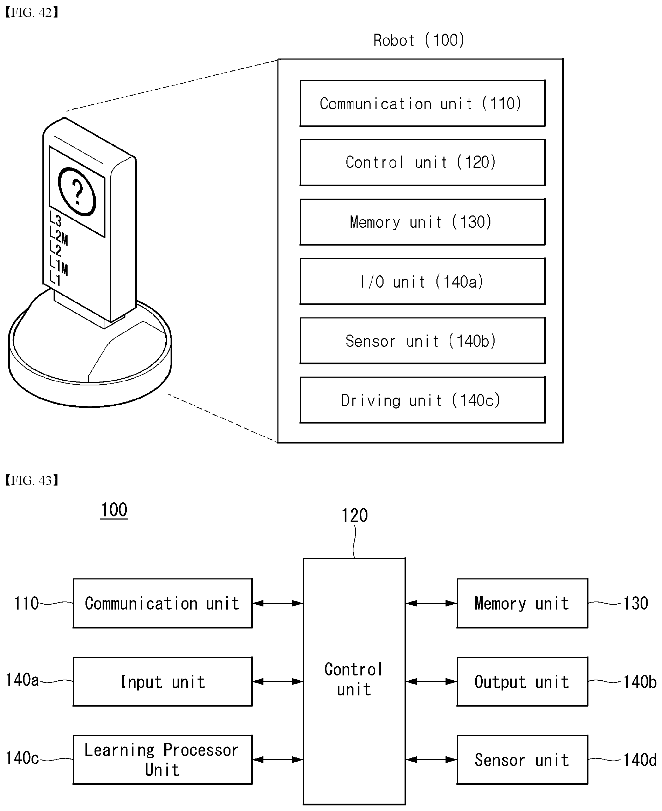

FIG. 42 illustrates a robot applied to various embodiments of the present disclosure. The robot may be categorized into an industrial robot, a medical robot, a household robot, a military robot, etc., based on a used purpose or field.

Referring to FIG. 42, a robot 100 may include a communication unit 110, a control unit 120, a memory unit 130, an I/O unit 140a, a sensor unit 140b, and a power supply unit 140c. The blocks 110 to 130/140a to 140c correspond to the blocks 110 to 130/140 of FIG. 37, respectively.

The communication unit 110 may transmit and receive signals (e.g., driving information and control signals) to and from external devices such as other wireless devices, other robots, or control servers. The control unit 120 may perform various operations by controlling components of the robot 100. The memory unit 130 may store data/parameters/programs/codes/instructions for supporting various functions of the robot 100. The I/O unit 140a may obtain information from the outside of the robot 100 and output information to the outside of the robot 100. The I/O unit 140a may include a camera, a microphone, a user input unit, a display unit, a speaker, and/or a haptic module. The sensor unit 140b may obtain internal information of the robot 100, surrounding environment information, user information, etc. The sensor unit 140b may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, etc. The driving unit 140c may perform various physical operations such as movement of robot joints. In addition, the driving unit 140c may allow the robot 100 to travel on the road or to fly. The driving unit 140c may include an actuator, a motor, a wheel, a brake, a propeller, etc.

FIG. 43 illustrates an AI device applied to various embodiments of the present disclosure.

The AI device may be implemented as a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, etc.

Referring to FIG. 43, an AI device 100 may include a communication unit 110, a control unit 120, a memory unit 130, an input unit 140a, an out unit 140b, a learning processor unit 140c, and a sensor unit 140d. The blocks 110 to 130/140a to 140d correspond to the blocks 110 to 130/140 of FIG. 37, respectively.

The communication unit 110 may transmit and receive wired/radio signals (e.g., sensor information, user input, learning models, or control signals) to and from external devices such as other AI devices (e.g., 100x, 200, or 400 of FIG. 33) or an AI server 200 using wired/wireless communication technology. To this end, the communication unit 110 may transmit information within the memory unit 130 to an external device and transmit a signal received from the external device to the memory unit 130.

The control unit 120 may determine at least one feasible operation of the AI device 100, based on information which is determined or generated using a data analysis algorithm or a machine learning algorithm. The control unit 120 may perform an operation determined by controlling components of the AI device 100. For example, the control unit 120 may request, search, receive, or use data of the learning processor unit 140c or the memory unit 130 and control the components of the AI device 100 to perform a predicted operation or an operation determined to be preferred among at least one feasible operation. The control unit 120 may collect history information including the operation contents of the AI device 100 and operation feedback by a user and store the collected information in the memory unit 130 or the learning processor unit 140c or transmit the collected information to an external device such as an AI server (400 of FIG. 33). The collected history information may be used to update a learning model.

The memory unit 130 may store data for supporting various functions of the AI device 100. For example, the memory unit 130 may store data obtained from the input unit 140a, data obtained from the communication unit 110, output data of the learning processor unit 140c, and data obtained from the sensor unit 140. The memory unit 130 may store control information and/or software code needed to operate/drive the control unit 120.

The input unit 140a may acquire various types of data from the exterior of the AI device 100. For example, the input unit 140a may acquire learning data for model learning, and input data to which the learning model is to be applied. The input unit 140a may include a camera, a microphone, and/or a user input unit. The output unit 140b may generate output related to a visual, auditory, or tactile sense. The output unit 140b may include a display unit, a speaker, and/or a haptic module. The sensing unit 140 may obtain at least one of internal information of the AI device 100, surrounding environment information of the AI device 100, and user information, using various sensors. The sensor unit 140 may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit 140c may learn a model consisting of artificial neural networks, using learning data. The learning processor unit 140c may perform AI processing together with the learning processor unit of the AI server (400 of FIG. 33). The learning processor unit 140c may process information received from an external device through the communication unit 110 and/or information stored in the memory unit 130. In addition, an output value of the learning processor unit 140c may be transmitted to the external device through the communication unit 110 and may be stored in the memory unit 130.

The claims described in various embodiments of the present disclosure can be combined in various ways. For example, technical features of the method claims of various embodiments of the present disclosure can be combined and implemented as a device, and technical features of the device claims of various embodiments of the present disclosure can be combined and implemented as a method. In addition, the technical features of the method claims and the technical features of the device claims in various embodiments of the present disclosure can be combined and implemented as a device, and the technical features of the method claims and the technical features of the device claims in various embodiments of the present disclosure can be combined and implemented as a method.

## Claims

1. A method performed by a user equipment (UE) in a communication system, the method comprising:
receiving, from a base station, a signal in which a channel state information (CSI) resource is punctured through a first node;
receiving, from the base station, a CSI-reference signal (RS) based on the CSI resource through a second node;
performing a CSI measurement for the second node based on the CSI-RS; and
transmitting, to the base station, a result of the CSI measurement through the second node,
wherein a reception timing of the signal and a reception timing of the CSI-RS are based on at least one of the first node, the second node, or a location of the UE.

2. The method of claim 1, wherein the UE is switched from being connected to the base station through the first node to being connected to the base station through the second node.

3. The method of claim 2, wherein the UE is connected to the base station through the second node without a handover from the first node to the second node.

4. The method of claim 2, wherein the UE is connected to the base station through the second node without synchronization to the second node.

5. The method of claim 1, wherein the CSI-RS is received through the punctured CSI resource in the signal.

6. The method of claim 1, wherein the reception timing of the signal and the reception timing of the CSI-RS are based on at least one of first satellite orbit information of the first node, second satellite orbit information of the second node, or the location of the UE.

7. The method of claim 6, wherein a delay difference related to a path difference between the first node and the second node is greater than a cyclic prefix (CP) length, and
wherein the delay difference is based on at least one of the first satellite orbit information, the second satellite orbit information, or the location of the UE.

8. A method performed by a base station in a communication system, the method comprising:
transmitting, to a user equipment (UE), a signal in which a channel state information (CSI) resource is punctured through a first node;
transmitting, to the UE, a CSI-reference signal (RS) based on the CSI resource through a second node; and
receiving, from the UE, a result of CSI measurement for the second node based on the CSI-RS through the second node,
wherein a transmission timing of the signal and a transmission timing of the CSI-RS are based on at least one of the first node, the second node, or a location of the UE.

9. The method of claim 8, wherein the UE is switched from being connected to the base station through the first node to being connected to the base station through the second node.

10. The method of claim 9, wherein the UE is connected to the base station through the second node without a handover from the first node to the second node.

11. The method of claim 9, wherein the UE is connected to the base station through the second node without synchronization to the second node.

12. The method of claim 8, wherein the CSI-RS is received through the punctured CSI resource in the signal.

13. The method of claim 8, wherein the transmission timing of the signal and the transmission timing of the CSI-RS are based on at least one of first satellite orbit information of the first node, second satellite orbit information of the second node, or the location of the UE.

14. The method of claim 13, wherein a delay difference related to a path difference between the first node and the second node is greater than a cyclic prefix (CP) length, and
wherein the delay difference is based on at least one of the first satellite orbit information, the second satellite orbit information, or the location of the UE.

15. A user equipment (UE) operating in a communication system, the UE comprising:
a transceiver;
at least one processor; and
at least one memory operably connectable to the at least one processor and storing instructions performing operations based on being executed by the at least one processor,
wherein the operations comprise all steps of a method according to any one of claims 1 to 7.

16. A base station operating in a communication system, the base station comprising:
a transceiver;
at least one processor; and
at least one memory operably connectable to the at least one processor and storing instructions performing operations based on being executed by the at least one processor,
wherein the operations comprise all steps of a method according to any one of claims 8 to 14.

17. A control device controlling a user equipment (UE) in a communication system, the control device comprising:
at least one processor; and
at least one memory operably connected to the at least one processor,
wherein the at least one memory stores instructions performing operations based on being executed by the at least one processor, and
wherein the operations comprise all steps of a method according to any one of claims 1 to 7.

18. A control device controlling a base station in a communication system, the control device comprising:
at least one processor; and
at least one memory operably connected to the at least one processor,
wherein the at least one memory stores instructions performing operations based on being executed by the at least one processor, and
wherein the operations comprise all steps of a method according to any one of claims 8 to 14.

19. One or more non-transitory computer readable mediums storing one or more instructions,
wherein the one or more instructions perform operations based on being executed by one or more processors, and
wherein the operations comprise all steps of a method according to any one of claims 1 to 7.

20. One or more non-transitory computer readable mediums storing one or more instructions,
wherein the one or more instructions perform operations based on being executed by one or more processors, and
wherein the operations comprise all steps of a method according to any one of claims 8 to 14.
